# EUROPÄISCHE PATENTSCHRIFT

(11) **EP 1 504 205 B1**
(45) Veröffentlichungstag und Bekanntmachung des Hinweises auf die Patenterteilung: **08.02.2006**
(21) Anmeldenummer: 03740125.4
(22) Anmeldetag: 02.05.2003
(51) Int. Cl.: F16H 57/04, F16H 57/08

(54) **PLANETENGETRIEBE**
PLANETARY GEAR
ENGRENAGE PLANETAIRE

(30) Priorität: 11.05.2002 DE 10221097
(43) Veröffentlichungstag der Anmeldung: 09.02.2005
(73) Patentinhaber: ZF FRIEDRICHSHAFEN Aktiengesellschaft, 88038 Friedrichshafen (DE)
(72) Erfinder: BAUKNECHT, Gert, 88048 Friedrichshafen (DE); ZIEMER, Peter, 88069 Tettnang (DE)
(86) Internationale Anmeldenummer: PCT/EP2003/004601
(87) Internationale Veröffentlichungsnummer: WO 2003/095870

(56) Entgegenhaltungen:
- EP-A- 0 609 659
- EP-A- 0 984 204
- DE-A- 3 012 846
- US-A- 5 480 362

## Beschreibung

Die vorliegende Erfindung betrifft ein Planetengetriebe nach dem Oberbegriff des Patentanspruchs 1.

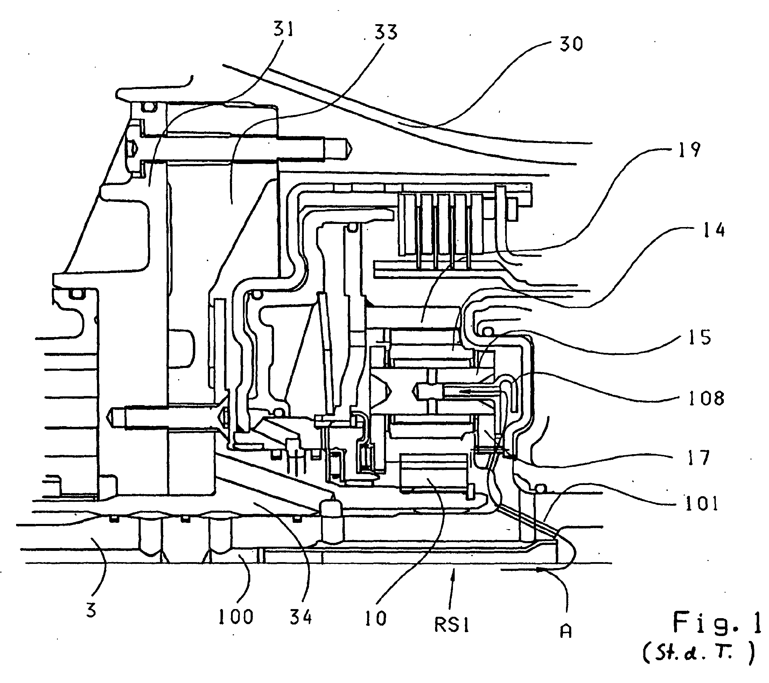

Planetenradsätze eingliedriger oder auch mehrgliedriger Planetengetriebe sind vielfältig bekannt. Zur Schmierung und Kühlung der Planetenräder der einzelnen Planetenradsätze ist allgemein vorgesehen, die Bolzen der'Planetenräder jeweils mit Schmiermittel-Bohrungen - üblicherweise eine zentrale Bohrung und eine oder mehrere Radialbohrungen - zu versehen und das Schmiermittel über diese Schmiermittel-Bohrungen sowohl der Lagerung als auch der Verzahnung der jeweiligen Planetenräder zuzuführen. Hierzu wird das von einem Hydrauliksystem bereitgestellte Schmiermittel üblicherweise über eine Zentralwelle des Planetengetriebes und geeignet ausgebildete radiale Bohrungen dieser Zentralwelle in einen Bereich nahe der einzelnen Planetenradsätze geleitet, vorzugsweise in einen Bereich unmittelbar neben den jeweiligen Planetenradsatz, derart, daß das Schmiermittel infolge Fliehkraftwirkung axial neben dem jeweiligen Planetenradsatz in radialer Richtung vorbeiströmen kann. Zur Aufstauung dieses radial anströmenden oder spritzenden Schmiermittels in dem Bereich der Bolzen des jeweiligen Plainetenradsatzes sind üblicherweise Schmiermittel-Fangbleche vorgesehen, die vorzugsweise an dem Planetenträger des jeweiligen Planetenradsatzes radial oberhalb der Bolzen befestigt sind. Das derart aufgestaute Schmiermittel gelangt dann infolge der Fliehkraftwirkung des anströmenden Schmiermittels auf einfache Weise in die Schmiermittel-Bohrungen der Bolzen des jeweiligen Planetenradsatzes und anschließend zur Lagerung und Verzahnung der Planetenräder. Eine solchermaßen ausgeführte Anordnung zur Schmierung und Kühlung eines Planetenradsatzes nach dem Stand der Technik ist beispielhaft in Fig. 1 dargestellt, wobei der Verlauf der Schmiermittel-Zufuhr mit A bezeichnet ist.

Die Schmiermittel-Fangbleche können aber auch an einem dem Planetenträger unmittelbar benachbarten Bauelement angeordnet sein, derart, daß nur ein geringer axialer Spalt zwischen Schmiermittel-Fangblech und Planetenradträger verbleibt.

Derartige Anordnungen zur Schmierung und Kühlung von einzelnen Planetenradsätzen sind auch in Verbindung mit verschiedenen Radsatzkonzepten mehrgängiger Planetengetriebe bekannt. Beispielsweise offenbart die US 6,120,410 eine Schnittdarstellung eines 6-Gang-Automatgetriebes mit mehreren Planetenradsätzen, die jeweils ein am Planetenträger befestigtes Schmiermittel-Fangblech aufweisen.

Nachteilig an diesen aus dem Stand der Technik bekannten Anordnungen zur Schmierung und Kühlung der Planetenräder von eingliedrigen oder mehrgliedrigen Planetenradsätzen ist neben der Bereitstellung der Schmiermittel-Fangbleche als zusätzliche Bauelemente sowohl auch der Aufwand für die Bearbeitung des jeweiligen Bauelementes, an dem die Schmiermittel-Fangbleche unter rotatorischer Belastung sicher befestigt sein müssen, als auch der Aufwand für die Montage der Schmiermittel-Fangbleche.

Die Aufgabe der Erfindung besteht nun darin, ausgehend vom genannten Stand der Technik, ein Planetengetriebe mit mindestens einem eingliedrigen oder mehrgliedrigen Planetenradsatz und einfachem, montagefreundlichem und kostengünstigem Schmiersystem für die Planetenräder des Planetenradsatzes zu schaffen.

Diese Aufgabe wird durch ein Planetengetriebe mit den Merkmalen des Hauptanspruchs gelöst Vorteilhafte Ausgestaltungen und Weiterbildungen ergeben sich aus den Unteransprüchen.

Die Erfindung ist anwendbar für alle Planetenradsätze eines Planetengetriebes, bei denen der jeweilige Planetenradträger zu einem benachbarten Bauelement keine Relativdrehzahl aufweist Erfindungsgemäß wird vorgeschlagen, dass der Planetenträger des jeweiligen Planetenradsatzes über ein statisches Dichtsystem gegen das entsprechende benachbarte Bauelement, welches stets mit gleicher Drehzahl wie der jeweilige Planetenträger rotiert, auf einem Durchmesser oberhalb der Bolzen des jeweiligen Ptanetenradsatzes schmiermitteldicht abgedichtet wird, derart, dass eine Schmiermittel-Kammer axial zwischen Planetenträger und benachbartem Bauelement gebildet wird, und dass die Schmiermittel-Zufuhr über diese Schmiermittel-Kammer in Schmiermittel-Bohrungen der Bolzen erfolgt und von dort zu den Lagerungen und Verzahnungen der Planetenräder des jeweiligen Planetenradsatzes. Dabei ist das zu dem Planetenradträger benachbarte Bauelement ein Schaltelement-Bauelement.

Im folgenden wird die Erfindung anhand der Zeichnungen Fig. 1 bis Fig. 5 näher erläutert.
Es zeigen:
- Fig. 1: eine Anordnung zur Schmierung eines Plane-tenradsatzes nach dem Stand der Technik;
- Fig. 2: ein beispielhaftes Getriebeschema eines Planetengetriebes mit einem Planetenträger ohne Relativdrehzahl zu einem benachbarten Bauelement;
- Fig. 3: ein Schaltschema des Getriebes gemäß Fig. 2;
- Fig. 4: eine beispielhafte erste Variante eines erfindungsgemäßen Planetengetriebes und
- Fig. 5: eine beispielhafte zweite Variante eines erfindungsgemäßen Planetengetriebes.

In allen Figuren sind die Bezugszeichen vergleichbarer Bauelemente auch gleichartig bezeichnet.

Wie bereits erwähnt, zeigt Fig. 1 eine typische Anordnung zur Schmierung eines einzelnen Planetenradsatzes RS1 nach dem Stand der Technik. Der Planetenradsatz RS1 ist radial oberhalb einer Nabe 34 angeordnet, die über eine Zwischenplatte 33 und eine (hier als Deckel ausgebildete) Getriebegehäusewand 31 mit einem Getriebegehäuse 30 verschraubt ist. Ein Sonnenrad 10 des Planetentradsatzes RS1 ist formschlüssig mit der Nabe 34 verbunden. Angetrieben wird der Planetenradsatz RS1 über ein Stegblech 17. Hierbei ist eine Antriebswelle 3 zentral durch Nabe 34 und Planetenradsatz RS1 hindurch geführt und auf der Seite des Planetenradsatzes RS1, die der Getriebegehäusewand 31 abgewandt ist, mit dem Stegblech 17 fest verbunden. Ein Hohlrad 19 bildet das Ausgangselement des Planetenradsatzes RS1. Als zum Stegblech 17 axial benachbartes Bauelement ist ein Kupplungszylinder angedeutet. Der Verlauf der Schmiermittel-Zufuhr zu den Planetenrädern 14 des Planetenradsatzes RS1 ist mit A bezeichnet. Das Schmiermittel gelangt über eine zentrale Schmiermittel-Zuführbohrung 100 der Antriebswelle 3 und eine als Schrägbohrung ausgeführte Schmiermittel-Zuführbohrung 101 der Antriebswelle 3 in Schmiermittel-Bohrungen der Bolzen 15 der Planetenräder 14 und von dort zur Lagerung und Verzahnung der Planetenräder 14. Zur Aufstauung von Schmiermittel ist ein konstuktiv aufwendig gestaltetes Schmiermittel-Fangblech 108 in die zentralen Schmiermittelbohrungen der Bolzen 15 eingesetzt.

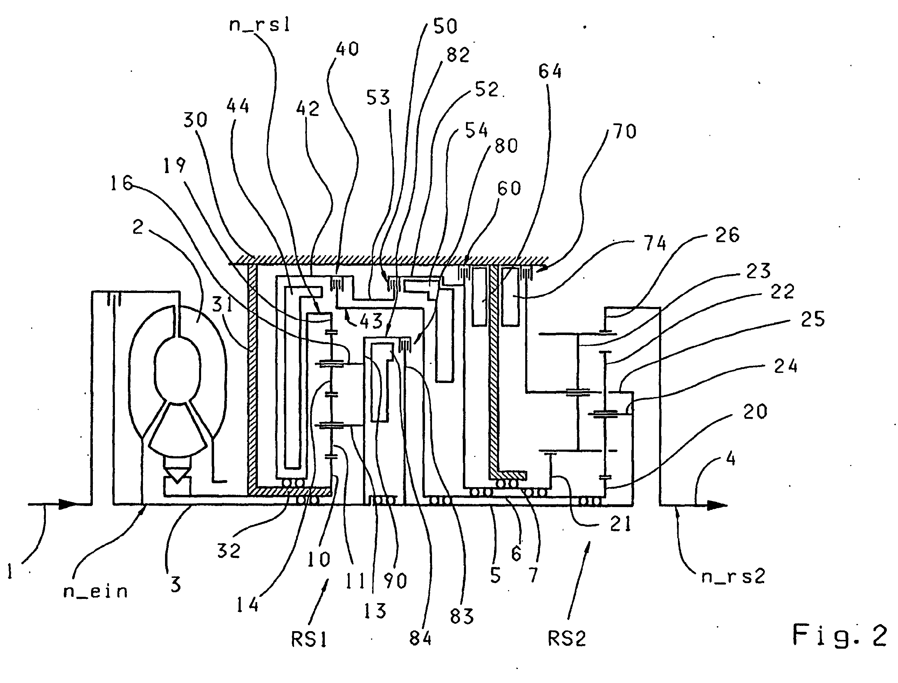

Fig. 2 zeigt ein beispielhaftes Getriebeschema eines Mehrstufen-Automatgetriebes mit einem eingliedrigen ersten Planetenradsatz RS1 als Vorschaltradsatz und einem zweigliedigen zweiten Planetenradsatz RS2 als Hauptradsatz. In diesem beispielhaften Radsatzkonzept ist das erste Planetengetriebe RS1 als nicht schaltbares Plus-Getriebe ausgeführt, mit inneren und äußeren Planetenrädern 11, 14, wobei ein Steg 13 der inneren Planetenräder 11 mit einem Steg 16 der äußeren Planetenräder 14 fest verbunden ist. Unter Plus-Getriebe ist dabei ein einfaches Planetengetriebe mit positiver Standgetriebe-Übersetzung zu verstehen; das Verhältnis der Drehzahlen von Hohlrad 19 und Sonnenrad 10 des ersten Planetenradsatzes RS1 ist bei stillstehend gedachten gekoppelten Stegen 13, 16 also positiv.

Im dargestellten Beispiel ist das Sonnenrad 10 des ersten Planetenradsatzes RS1 über einen zylindrischen Vorsprung 32 einer Getriebegehäusewand 31 fest mit einem Getriebegehäuse 30 verbunden. Die gekoppelten Stege 13, 16 des ersten Planetenradsatzes RS1 bilden dessen Eingangselement und sind mit einer Antriebswelle 3 des Getriebes verbunden, auf der Seite des ersten Planetenradsatzes RS1, die der Getriebegehäusewand 31 abgewandt bzw. dem zweiten Planetenradsatz RS2 zugewandt ist. Die mit einer Getriebe-Eingangsdrehzahl n_ein rotierenden Antriebswelle 3 durchdringt den zylindrischen Vorsprung 32 der Getriebegehäusewand 31 zentral und ist beispielsweise über ein als Drehmomentwandler 2 ausgebildetes Anfahrelement mit einer Motorwelle 1 eines nicht näher dargestellten Antriebsmotors wirkverbunden. Das Hohlrad 19 des ersten Planetenradsatzes RS1 bildet dessen Ausgangselement und rotiert mit einer Ausgangsdrehzahl n_rs1.

Der zweite Planetenradsatz RS2 ist beispielhaft als Ravigneaux-Radsatz ausgebildet, eine bekannt kompakte Ausführung eines Zweisteg-Vierwellen-Getriebes. Der zweite Planetenradsatz RS2 umfaßt ein kleines Sonnenrad 20, ein großes Sonnenrad 21, erste und zweite Planetenräder 22 und 23, einen Steg 24 der ersten Planetenräder 22, einen mit diesem Steg 24 fest verbundenen Steg 25 der zweiten Planetenräder 23, sowie ein Hohlrad 26. Das Hohlrad 26 bildet das Ausgangselement des zweiten Planetenradsatzes RS2, rotiert mit der Ausgangsdrehzahl n_rs2 und ist mit einer Abtriebswelle 4 des Getriebes verbunden. Das kleine Sonnenrad 21 bildet ein erstes Eingangselement des zweiten Planetenradsatzes RS2. Das große Sonnenrad 22 bildet ein zweites Eingangselement des zweiten Planetenradsatzes RS2. Die gekoppelten Steg 24, 25 schließlich bilden ein drittes Eingangselement des zweiten Planetenradsatzes RS2.

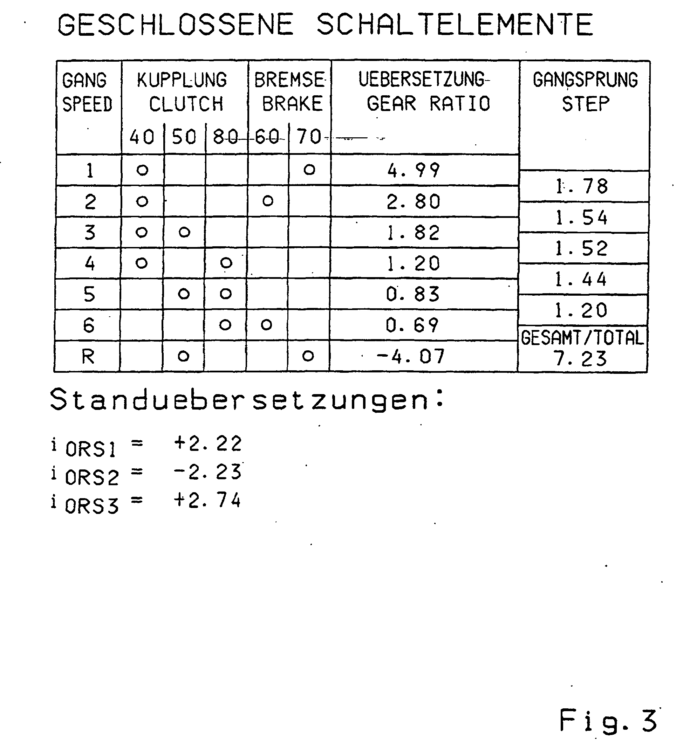

In Verbindung mit den vorgesehenen fünf Schaltelementen 40, 50, 60, 70, 80 sind insgesamt sechs Vorwärtsgänge durch selektive Druckbeaufschlagung der den Schaltelementen 40, 50, 60, 70, 80 zugeordneten Servo-Einrichtungen 44, 54, 64, 74, 84 ohne Gruppenschaltung schaltbar, wie in dem zugehörigen Schaltschema in Fig. 3 dargestellt. Dabei ist das erste Eingangselement des zweiten Planetenradsatzes RS2 über das als Kupplung ausgebildete erste Schaltelement 40 mit der Ausgangsdrehzahl n_rs1 des ersten Planetenradsatzes RS1 antreibbar. Das zweite Eingangselement des zweiten Planetenradsatzes RS2 ist über das als Kupplung ausgebildete zweite Schaltelement 50 ebenfalls mit der Ausgangsdrehzahl n_rs1 des ersten Planetenradsatzes RS1 antreibbar und zusätzlich über das als Bremse ausgebildete dritte Schaltelement 60 am Getriebegehäuse 30 festsetzbar. Das dritte Eingangselement des zweiten Planetenradsatzes RS2 schließlich ist über das als Kupplung ausgebildete fünfte Schaltelement 80 mit der Getriebe-Eingangsdrehzahl n_ein der Antriebswelle 3 antreibbar und über das als Bremse ausgebildete vierte Schaltelement 70 am Getriebegehäuse 30 festsetzbar.

In einer anderen Ausgestaltung des ersten Planetenradsatzes RS1 kann beispielsweise auch vorgesehen sein, daß dieser als schaltbares Plus-Getriebe ausgeführt ist, wobei unverändert die gekoppelten Stege 13, 16 das Eingangselement und das Hohlrad 19 unverändert das Ausgangselement des ersten Planetenradsatzes RS1 bilden, jedoch das Sonnenrad 10 über ein zusätzliches, als Bremse ausgebildetes sechstes Schaltelement schaltbar ist. Auf diese Weise ist in Verbindung mit dem zuvor beschriebenen Ravigneaux-Radsatz und dessen zuvor beschriebenen drehzahlmäßigen Anbindung über die fünf Schaltelemente 40, 50, 60, 70 und 80 an das Plus-Getriebe und die Antriebswelle 3 beispielsweise ein zusätzlicher siebter Vorwärtsgang - auch ohne Gruppenschaltung - schaltbar.

In dem in Fig. 2 dargestellten Ausführungsbeispiel ist ein Außenlamellenträger 42 das Eingangselement des ersten Schaltelementes 40 und mit dem Hohlrad 19 des ersten Planetenradsatzes RS1 verbunden. Entsprechend bildet ein Innenlamellenträger 43 das Ausgangselement des ersten Schaltelementes 40 und ist über eine erste Sonnenwelle 6 mit dem kleinen Sonnenrad 20 des zweiten Planetenradsatzes RS2 verbunden. Ein Innenlamellenträger 53 bildet das Eingangselement des zweiten Schaltelementes 50 und ist mit dem Außenlamellenträger 42 des ersten Schaltelementes 40 und somit auch mit dem Hohlrad 19 des ersten Planetenradsatzes RS1 verbunden. Entsprechend bildet ein Außenlamellenträger 52 das Ausgangselement des zweiten Schaltelementes 50 und ist über eine zweite Sonnenwelle 7 mit dem großen Sonnenrad 21 des zweiten Planetenradsatzes RS2 verbunden. Ein Außenlamellenträger 82 ist das Eingangselement des fünften Schaltelementes 80 und ist mit der Antriebswelle 3 und mit den gekoppelten Stegen 13, 16 des ersten Planetenradsatzes RS1 verbunden. Entsprechend bildet ein Innenlamellenträger 83 das Ausgangselement des fünften Schaltelementes 80 und ist über eine Stegwelle 5 mit den gekoppelten Stegen 24, 25 des zweiten Planetenradsatzes RS2 verbunden.

Wesentlich ist bei dem in Fig. 2 dargestellten Getriebeschema, daß das fünfte Schaltelement 80 unmittelbar neben dem ersten Planetenradsatz RS1 angeordnet ist, auf der Seite des ersten Planetenradsatz RS1, die der Getriebegehäusewand 31 abgewandt bzw. dem zweiten Planetenradsatz RS2 zugewandt ist. Dabei grenzt ein scheibenförmiger Abschnitt 90 des zylinderförmig ausgebildeten Außenlamellenträgers 82 des fünften Schaltelementes 80 axial unmittelbar an die gekoppelten Stege 13, 16 der inneren und äußeren Planetenräder 11, 14 des ersten Planetenradsatzes RS1 an. Aus der kraftflußmäßigen Anbindung der gekoppelten Stege 13, 16 des ersten Planetenradsatzes RS1 und des Außenlamellenträgers 82 des fünften Schaltelementes 80 an die Antriebswelle 3 ist ersichtlich, daß zwischen den gekoppelten Stegen 13, 16 und dem Außenlamellenträger 82 keine Relativdrehzahl vorliegt.

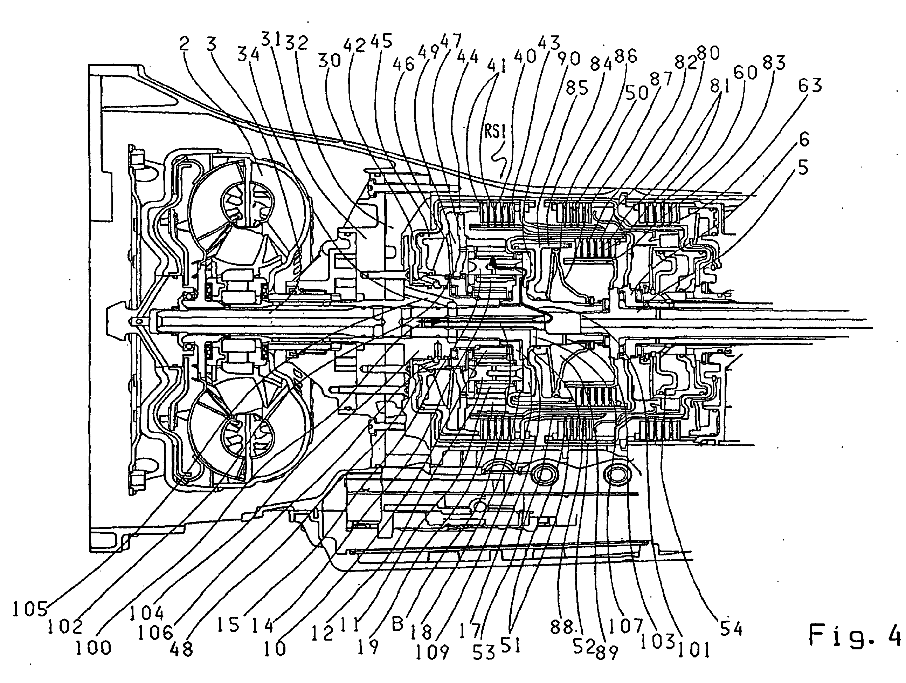

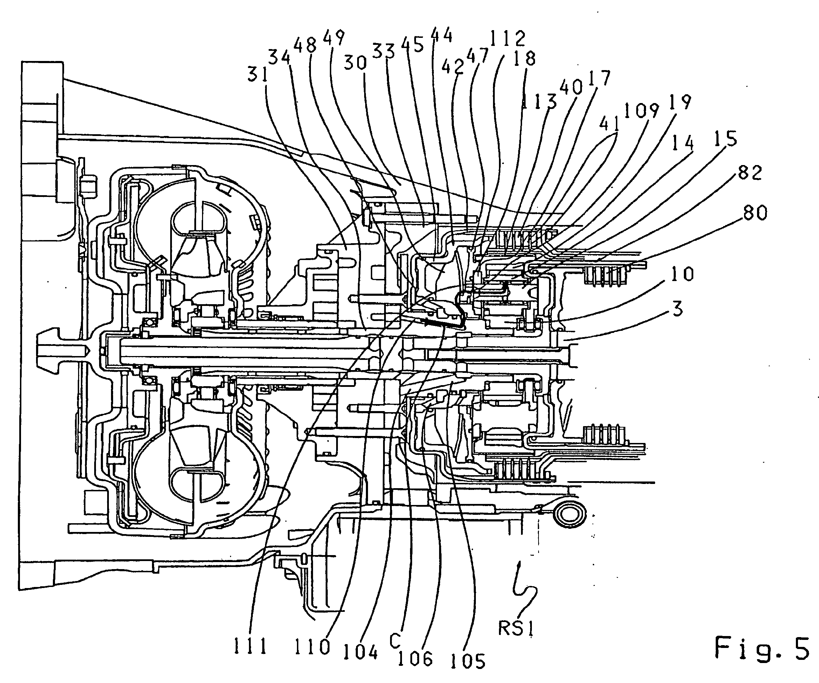

Somit eignet sich ein derartiges Radsatzkonzept eines mehrgängigen Automatgetriebes in besonders günstige Weise für den Einbau eines erfindungsgemäßen Planetenradsatzes, der im folgenden anhand Fig. 4 und Fig. 5 in zwei beispielhaften Varianten detailliert erläutert wird.

Fig. 4 zeigt eine Sektion eines Getriebeschnittes einer beispielhaften Auskonstruktion des Automatgetriebes gemäß Fig. 2. Dargestellt ist eine Baugruppe um den ersten Planetenradsatz RS1 herum. Anhand dieser beispielhaften Detailkonstruktion wird nun eine erste beispielhafte Variante eines erfindungsgemäßen Planetenradsatzes mit optimierter Schmiermittel-Zuführung erläutert.

Wie in Fig. 4 ersichtlich, entspricht die räumliche Anordnung des ersten Planetenradsatzes RS1, des ersten, zweiten und fünften, jeweils als Kupplung ausgebildeten Schaltelementes 40, 50, 80, sowie des dritten, als Bremse ausgebildeten Schaltelementes 60 innerhalb des Getriebegehäuses 30 und relativ zueinander der in Fig. 2 schematisch dargestellten Anordnung.

Das Getriebegehäuse 30 weist eine Getriebegehäusewand 31 auf, welche eine (beispielhaft als Deckel ausgeführte) Außenwand in Richtung eines beispielhaft als Drehmomentwandler 2 ausgeführten Anfahrelementes des Getriebes bildet. Vom Innenraum des Getriebegehäuses 30 her ist eine Zwischenplatte 32 vorgesehen, die mit der Getriebegehäusewand 31 und dem Getriebegehäuse 30 verschraubt ist und insbesondere verschiedene - im einzelnen nicht näher dargestellte - Druckmittelkanäle ausweist. Mit dieser Zwischenplatte 32 wiederum ist eine Nabe 34 verschraubt. Die Nabe 34 weist insbesondere einen Druck-Zuführkanal 104 zu einem Kolbenraum 48 des ersten Schaltelementes 40, sowie einen Druck-Zuführkanal 105 zu einem Kolbenraum 88 des fünften Schaltelemenetes 80 auf. Zumindest überwiegend in radialer Richtung oberhalb der Nabe 34 ist der (erste) Planetenradsatz RS1 angeordnet, wobei dessen Sonnenrad 10 an der Nabe 34 festgesetzt ist, vorzugsweise formschlüssig über ein entsprechend ausgebildetes Mitnahmeprofil.

Der als Plus-Getriebe ausgebildete (erste) Planetenradsatz RS1 umfaßt neben dem Sonnenrad 10 mindestens ein inneres Planetenrad 11, welches über einen Bolzen 12 an einem Stegblech 17 verdrehbar gelagert ist, mindestens ein äußeres Planetenrad 14, welches über einen Bolzen 15 ebenfalls an dem Stegblech 17 verdrehbar gelagert ist, sowie ein Hohlrad 19. Das Stegblech 17 erfüllt somit die Funktion der Koppelung der jeweiligen Stege der inneren und äußeren Planetenräder 11, 14 und ist als Eingangselement des Planetenradsatzes RS1 auf der zur Zwischenplatte 32 entgegengesetzten Seite des Planetenradsates RS1 mit einer Antriebswelle 3, welche die Nabe 34 und den Planetenradsatz RS1 zentral durchdringt, verbunden, vorzugsweise formschlüssig über ein entsprechend ausgebildetes Mitnahmeprofil. Das Hohlrad 19 bildet das Ausgangselement des Planetenradsatzes RS1.

Entsprechend dem Kraftflußschema gemäß Fig. 2 ist das Hohlrad 19 des Planetenradsatzes RS1 mit einem Außenlamellenträger 42 des ersten Schaltelementes 40 verbunden. Dabei ist der Außenlamellenträger 42 des ersten Schaltelementes 40 als Zylinder ausgebildet, der in zur zwischenplatte 32 bzw. in zum Drehmomentwandler 2 entgegengesetzter Richtung geöffnet ist und unmittelbar an die Zwischenplatte 32 angrenzt. Analog zu Fig. 2 ist der Außenlamellenträger 42 des ersten Schaltelementes 40 dabei über einen nabenförmigen Abschnitt, der sich axial zwischen Zwischenplatte 32 und Planetenradsatz RS1 unmittelbar oberhalb der Nabe 34 erstreckt, radial auf der mit der Zwischenplatte 32 verschraubten Nabe 34 gelagert. Ein zumindest weitgehend scheibenförmiger Abschnitt des Außenlamellenträgers 42 des ersten Schaltelementes 40 erstreckt sich radial entlang der Zwischenplatte 42. Auf großem Durchmesser schließt sich ein zylinderförmiger Abschnitt des Außenlamellenträgers 42 an den scheibenförmigen Abschnitt an und erstreckt sich axial in zur Zwischenplatte 32 entgegengesetzter Richtung bis über die Lamellen 41 des ersten Schaltelementes 40, welche in radialer Richtung oberhalb des Hohlrades 19 des Planetenradsatzes RS1 angeordnet sind.

Eine Servo-Einrichtung 44 des ersten Schaltelementes 40 ist innerhalb des Außenlamellenträgers 42 angeordnet, axial angrenzend an den Planetenradsatz RS1, und betätigt die Lamellen 41 des ersten Schaltelementes 40 in zur Zwischenplatte 32 entgegengesetzter Richtung. Dabei umfaßt die Servo-Einrichtung 44 des ersten Schaltelementes 40 einen Kolben 45, eine beispielhaft als Tellerfeder ausgebildete Kolben-Rückstellfeder 46, sowie eine Stauscheibe 47. Kolben 45 und Außenlamellenträger 42 bilden den Kolbenraum 48 des ersten Schaltelementes 40, welcher über eine Druck-Zuführbohrung 106 des (rotierenden) Außenlamellenträgers 42 des ersten Schaltelementes 40 und den Druck-Zuführkanal 104 der (gehäusefesten) Nabe 34 mit Druck beaufschlagbar ist. Auf der dem Kolbenraum 48 gegenüber liegenden Seite des Kolbens 45 sind Kolben-Rückstellfeder 46 und Stauscheibe 47 angeordnet, derart, daß zwischen Kolben 45 und Stauscheibe 47 ein zum Kolben 45 hin druckdichter Druckausgleichsraum 49 gebildet wird. Hierdurch wird der hydrodynamische Druck des rotierenden Kolbenraums 48 des ersten Schaltelementes 40 vorzugsweise vollständig, zumindest aber teilweise ausgeglichen. Im dargestellten Beispiel erfolgt die Schmiermittel-Zufuhr zu dem Druckausgleichsraum 49 über eine zentrale Schmiermittelbohrung 100 der Antriebswelle 3, über eine (in diesem Beispiel schräge) Schmiermittel-Zuführbohrung 101 der Antriebswelle 3, über Spalte der Mitnahmeverzahnung zwischen Antriebswelle 3 und Stegblech 17, über Spalte der Mitnahmeverzahnung zwischen Nabe 34 und Sonnenrad 10, über Spalte der Lagerung des Außenlamellenträgers 42 auf der Nabe 34, sowie über eine Schmiermittel-Zuführbohrung 102 des Außenlamellenträ gers 42. Die Stauscheibe 47 ist im dargestellten Ausführungsbeispiel mit dem Hohlrad 19 des Planetenradsatzes RS1 verschweißt und übernimmt zusätzlich die Aufgabe der Drehmomentübertragung zwischen dem Hohlrad 19 und dem nabenförmigen Abschnitt des Außenlamellenträgers 42 des ersten Schaltelementes 40.

Auf eine andere mögliche Ausgestaltung der Schmiermittel-Zufuhr zu dem Druckausgleichsraum 49 des ersten Schaltelementes 40, die nicht über über entsprechend ausgeführte Schmiermittel-Bohrungen der Antriebswelle 3 erfolgt, wird später im Rahmen der Erläuterung von Fig. 5 eingegangen.

Wie in Fig. 4 dargestellt, ist das fünfte Schaltelement 80 auf der Seite des Planetenradsatzes RS1 angeordnet, die der Servo-Einrichtung 44 des ersten Schaltelementes 40 bzw. auf der der Zwischenplatte 32 gegenüberliegt. Ein Außenlamellenträger 82 des fünften Schaltelementes 80 bildet dessen Eingangselement und ist mit der Antriebswelle 3 verbunden. Dabei ist der Außenlamellenträger 82 als Zylinder ausgebildet, der in zum Planetenradsatz RS1 entgegengesetzter Richtung geöffnet ist und unmittelbar an den Planetenradsatz RS1 angrenzt. Analog zu Fig. 2 ist dabei ein zumindest weitgehend scheibenförmiger Abschnitt 90 des Außenlamellenträgers 82 mit der Antriebswelle 3 fest verbunden und erstreckt sich radial unmittelbar angrenzend an das Stegblech 17, etwa bis zum Außendurchmesser des Hohlrades 19 des Planetenradsatzes RS1. Hier schließt sich ein zylinderförmiger Abschnitt des Außenlamellenträger 82 an den scheibenförmigen Abschnitt 90 an, erstreckt sich zunächst axial in Richtung Planetenradsatzes RS1 radial über das Stegblech 17 hinweg bis unmittelbar Hohlrad 19, und erstreckt sich anschließend in zum Planetenradsatzes RS1 entgegengesetzter Richtung bis über die Lamellen 81 des fünften Schaltelementes 80.

Da zwischen dem Stegblech 17 des Planetenradsatzes RS1 und dem beispielhaft als Außenlamellenträger 82 ausgebildeten Eingangselement des fünften Schaltelementes 80 konzeptbedingt keine Relativdrehzahl vorliegt, ist erfindungsgemäß zwischen dem mit Getriebe-Eingangsdrehzahl n_ein angetriebenen Stegblech 17 und dem Außenlamellenträger 82 auf einem Durchmesser oberhalb der Bolzen 12, 15 der inneren bzw. äußeren Planetenräder 11, 14 des Planetenradsatzes RS1 ein Abdichtelement 18 vorgesehen. Dieses Abdichtelement 18 kann in besonders vorteilhafter Weise als einfacher O-Ring ausgeführt sein. Im dargestellten Beispiel ist das Abdichtelement 18 in eine Radialnut des Stegblechs 17 eingelegt. In anderen Ausgestaltungen kann beispielsweise auch eine Axialnut im Stegblech 17 oder im Lamellenträger 82 zur Aufnahme des Abdichtelementes 18 vorgesehen sein. Für das Abdichtelement 18 können aber auch alle anderen bekannten statischen Abdicht-Systeme eingesetzt werden, wie beispielsweise Lippendichtringe, Rechteckringe, Flachdichtungen oder schmiermitteldichte Verklebung.

Gemäß der Erfindung wird also axial zwischen dem angetriebenen Stegblech 17 des Planetenradsatzes RS1 und dem daran axial angrenzenden Bauelement - im Ausführungsbeispiel dem Außenlamellenträger 82 des fünften Schaltelementes 80 - eine Schmiermittel-Kammer 109 gebildet. Die Schmiermittel-Zufuhr zu den Lagern der Planetenräder 11, 14 des Planetenradsatzes RS1 ist in Fig. 4 mit B bezeichnet und erfolgt über die zentrale Schmiermittel-Zuführbohrung 100 der Antriebswelle 3, die in diesem Beispiel als Schrägbohrung ausgebildete Schmiermittel-Zuführbohrung 101 der Antriebswelle 3, über die auch des Druckausgleichsraum 49 des ersten Schaltelementes 40 mit Schmiermittel versorgt wird, über einen sich radial erstreckenden Spalt zwischen Stegblech 17 und dem scheibenförmigen Abschnitt 90 des Außenlamellenträgers 82 des fünften Schaltelementes in diese Schmiermittel-Kammer 109. Von der Schmiermittel-Kammer 109 gelangt das Schmiermittel über zentrale und radiale Schmiermittel-Bohrungen der Bolzen 12, 15 zu den Lagern und der Verzahnung der Planetenräder 11, 14 des Planetenradsatzes RS1. Auf diese Weise wird eine optimale Schmiermittelversorgung der rotierenden Planetenräder 12 und 15 erreicht, ohne daß ein aufwendiges zusätzliches Bauteil, beispielsweise ein an dem Stegblech 17 befestigtes Schmiermittel-Fangblech, erforderlich ist.

Eine Servo-Einrichtung 84 des fünften Schaltelementes 80 ist innerhalb des Außenlamellenträgers 82 des fünften Schaltelementes 80 angeordnet, benachbart zum Planetenradsatz RS1, und betätigt die Lamellen 81 des fünften Schaltelementes 80 in zum Planetenradsatz RS1 entgegengesetzter Richtung. Ähnlich wie die Servo-Einrichtung 44 des ersten Schaltelementes 40 weist auch die Servo-Einrichtung 84 des fünften Schaltelementes 80 neben einer Betätigungseinrichtung für die Lamellen 81 einen dynamischen Druckausgleich auf. Dabei umfaßt die Servo-Einrichtung 84 einen Kolben 85, eine beispielhaft als Tellerfeder ausgebildete Kolben-Rückstellfeder 86, sowie eine Stauscheibe 87. Kolben 85 und Außenlamellenträger 82 bilden den Kolbenraum 88 des fünften Schaltelementes 80, welcher über eine Druck-Zuführbohrung 107 der Antriebswelle 3 mit Druck beaufschlagbar ist. Auf der dem Kolbenraum 88 gegenüber liegenden Seite des Kolbens 85 sind Kolben-Rückstellfeder 86 und Stauscheibe 87 angeordnet, derart, daß zwischen Kolben 85 und Stauscheibe 87 ein zum Kolben 85 hin druckdichter Druckausgleichsraum 89 gebildet wird. Hierdurch wird der hydrodynamische Druck des rotierenden Kolbenraums 88 des fünften Schaltelementes 80 vorzugsweise vollständig, zumindest aber teilweise ausgeglichen. Im dargestellten Beispiel erfolgt die Schmiermittel-Zufuhr zu dem Druckausgleichsraum 89 über die zentrale Schmiermittelbohrung 100 der Antriebswelle 3 und über eine radiale Schmiermittelzuführbohrung 103 der Antriebswelle 3.

Ein Innenlamellenträger 83 bildet das Ausgangselement des fünften Schaltelementes 80 und erstreckt sich in axialer Richtung radial unterhalb der Lamellen 81 des fünften Schaltelementes 80 zentrisch zu einer zentral angeordneten Stegwelle 5, mit der er fest verbunden ist. Die Anbindung der Stegwelle 5 an den zweiten Planetenradsatz RS2 ist nicht weiter dargestellt.

Ein Innenlamellenträger 43 bildet das Ausgangselement des ersten Schaltelementes 40 und übergreift das fünfte Schaltelement 80 vollständig. Dabei erstreckt sich der Innenlamellenträger 43 in axialer Richtung von den Lamellen 41 des ersten Schaltelementes 40 bis über die Lamellen 81 des fünften Schaltelementes 80 und verläuft auf der Seite dem Planetenradsatz RS1 abgewandten Seite der Lamellen 81 zentrisch in Richtung Stegwelle 5, bis zu einer koaxial oberhalb der Stegwelle 5 verlaufenden ersten Sonnenwelle 6, mit der er fest verbunden ist. Die Anbindung der ersten Sonnnenwelle 6 an den zweiten Planetenradsatz RS2 ist nicht weiter dargestellt.

Entsprechend dem Kraftflußschema gemäß Fig. 2 ist ein Innenlamellenträger 53 als Eingangselement des zweiten Schaltelementes 50 mit dem Außenlamellenträger 42 des ersten Schaltelementes 40 verbunden. Die Lamellen 51 des zweiten Schaltelementes 50 sind oberhalb der Lamellen 81 des fünften Schaltelementes 80 angeordnet. Ein Außenlamellenträger 52 bildet das Ausgangselement des zweiten Schaltelementes und ist als in Richtung Planetenradsatz RS1 hin offener Zylinder ausgebildet. Dabei ist ein Innenlamellenträger 63 des dritten Schaltelementes 60 in den Außenlamellenträger 52 integriert. Eine Servo-Einrichtung 54 des zweiten Schaltelementes 50 ist innerhalb des zylinderförmigen Außenlamellenträgers 52 angeordnet, in axialer Richtung neben den Lamellen 81 des fünften Schaltelementes 80, wobei axial zwischen diesen Lamellen 81 und der Servo-Einrichtung 54 nur noch ein scheibenförmiger Abschnitt des Innenlamellenträgers 43 des ersten Schaltelementes 40, welcher das fünfte Schaltelement 80 umgreift, in radialer Richtung verläuft.

Wie in Fig. 4 ersichtlich, handelt es sich also um eine äußerst kompakte und bauraumsparende Anordnung einer Baugruppe des Radsatzkonzeptes gemäß Fig. 2, die aus dem ersten Planetenradsatz RS1 und dem ersten, zweiten und fünften Schaltelement 40, 50, 80 besteht, mit optimaler Schmiermittel-Versorgung der rotatorisch hoch belasteten Planetenräder 11, 14 des ersten Planetenradsatzes RS1.

Fig. 5 zeigt eine Sektion eines Getriebeschnittes einer beispielhaften anderen Auskonstruktion eines erfindungsgemäßen Planetengetriebes. Dabei basiert die räumliche Anordnung der einzelnen Bauelemente und die drehzahlmäßige Anbindung von Eingangs- und Ausgangselement des einzelnen Planetenradsatzes RS1 an weitere Getriebekomponenten auf dem Radsatzkonzept des Standes der Technik der US 6,120,410. Der (erste) Planetenradsatz RS1 entspricht in seiner Funktion und drehzahlmäßiger Anbindung also einem Vorschalt-Planetenradsatz, der mit Getriebe-Eingangsdrehzahl n_ein angetrieben wird und dessen Ausgangsdrehzahl n_rs1, die stets kleiner ist als die Getriebe-Eingangsdrehzahl n_ein, über zwei Schaltelemente auf zwei nicht miteinander verbundene Eingangselemente eines Haupt-Planetenradsatzes übertragbar ist, wobei ein drittes Eingangselement des Haupt-Planetenradsatzes zusätzlich über eine weiteres Schaltelement mit der Getriebe-Eingangsdrehzahl n_ein antreibbar ist. In Fig. 5 ist - ähnlich wie in Fig. 4 - eine Baugruppe um diesen ersten Planetenradsatz RS1 herum dargestellt. Anhand dieser beispielhaften Detailkonstruktion wird nun eine zweite beispielhafte Variante eines erfindungsgemäßen Planetenradsatzes mit optimierter Schmiermittel-Zuführung erläutert.

Im wesentlichen unterschiedlich zu der zuvor anhand Fig. 4 detailliert beschriebenen ersten beispielhaften Auskonstruktion der Baugruppe um den ersten Planetenradsatz RS1 ist zum einen die Ausbildung des Planetenradsatzes als Minus-Getriebe, also mit einfachen Planeten anstelle Doppelplaneten. Unter Minus-Getriebe ist dabei ein einfaches Planetengetriebe mit negativer Standgetriebe-Übersetzung zu verstehen; das Verhältnis der Drehzahlen von Hohlrad 19 und Sonnenrad 10 des Planetenradsatzes RS1 ist bei stillstehend gedachtem Steg also negativ. Zum anderen bildet das Hohlrad 19 nunmehr das fest mit der Antriebswelle 3 verbundene Eingangselement des Planetenradsatzes RS1 und das Stegblech 17 nunmehr das Ausgangselement des Planetenradsatzes RS1. Das Sonnenrad 10 ist unverändert über die Nabe 34, die Zwischenplatte 32 und die Getriebegehäusewand 31 an dem Getriebegehäuse 30 festgesetzt.

Das fünfte Schaltelement 80, insbesondere dessen Außenlamellenträger 82, grenzt (im Unterschied zur US 6,120,410, aber wie bei der Anordnung gemäß Fig. 4) auf der der Getriebegehäusewand 31 gegenüberliegenden Seite des Planetenradsatzes RS1 an den Planetenradsatz RS1 an. Die räumliche Anordnung des ersten Schaltelementes 40 - insbesondere die räumliche Anordnung von Außenlamellenträger 42, Servo-Einrichtung 44 des ersten Schaltelementes 40 - innerhalb des Getriebegehäuses 30 und relativ zum Planetenradsatz RS1 entspricht ebenfalls der in Fig. 4 dargestellten Anordnung. Der Außenlamellenträger 42 als Eingangselement des ersten Schaltelementes 40 ist auf der Seite des Planenetradsatzes RS1, die der Getriebegehäusewand 31 bzw. der Servo-Einrichtung 44 des ersten Schaltelementes 40 zugewandt ist, mit dem - nunmehr als Stegblech 17 ausgebildeten - Ausgangselement des Planetenradsatzes RS1 verbunden. Die Stauscheibe 47 der Servo-Einrichtung 44 des ersten Schaltelementes 40 grenzt - wie in Fig. 4 - unmittelbar axial an den Planetenradsatz RS1 auf dessen der Getriebegehäusewand 31 bzw. dem Kolben 45 zugewandten Seite an. Analog zu Fig. 4 bildet die Stauscheibe 47 zusammen mit dem Kolben 45 des ersten Schaltelementes 40 den Druckausgleichsraums 49 zum Ausgleich des hydrodynamischen Druckes des rotierenden Kolbenraums 48 des ersten Schaltelementes 40 und überträgt das Drehmoment von dem hier als Hohlrad 19 ausgebildeten Ausgangselement des Planetenradsatzes RS1 auf das hier als Außenlamellenträger 42 ausgebildete Eingangselement des ersten Schaltelementes 40.

Wesentlich ist, daß - im Unterschied zu der ersten beispielhaften Variante eines erfindungsgemäßen Planetenradsatzes gemäß Fig. 4 - nunmehr zwischen dem Stegblech 17 und der Stauscheibe 47, die axial, keine Relativdrehzahl auftritt.

Erfindungsgemäß ist zwischen dem Stegblech 17 und dem zu diesem Stegblech 17 (in Richtung Getriebegehäusewand 31 bzw. Servo-Einrichtung 44 des ersten Schaltelementes 40) axial benachbarten Ausgangselement des Planetenradsatzes RS1 - im vorliegenden Beispiel die Stauscheibe 47 der Servo-Einrichtung 44 des ersten Schaltelementes 40 - auf einem Durchmesser, der größer ist als die Bolzen 15 der Planetenräder 14 des Planetenradsatzes RS1, ein Dichtelement 18 vorgesehen. Dieses Abdichtelement 18 kann in besonders vorteilhafter Weise als einfacher O-Ring ausgeführt sein. Im dargestellten Beispiel ist das Abdichtelement 18 in eine Axialnut der Stauscheibe 47 eingelegt. In einer anderen Ausgestaltungen kann das Abdichtelement 18 auch in einer Axialnut des Stegblechs 17 angeordnet sein. Anstelle einer Axialnut zur Aufnahme des Abdichtelementes 18 können Stauscheibe 47 oder Stegblech 17 beispielsweise auch eine Radialnut aufweisen. Für das Abdichtelement 18 können auch alle anderen bekannten statischen Abdicht-Systeme eingesetzt werden, wie beispielsweise Lippendichtringe, Rechteckringe, Flachdichtungen oder schmiermitteldichte Verklebung.

Gemäß der Erfindung wird also axial zwischen dem Stegblech 17 des Planetenradsatzes RS1 und dem daran axial angrenzenden Bauelement - im Ausführungsbeispiel gemäß Fig. 5 der Stauscheibe 47 der Servo-Einrichtung 44 des ersten Schaltelementes 40 - eine Schmiermittel-Kammer 109 gebildet. Die solchermaßen gebildete Schmiermittel-Kammer 109 ist bei der zweiten Variante eines erfindungsgemäßen Planetengetriebes also auf der Seite des Planetenradsatzes RS1 angeordnet, die der Getriebegehäusewand 31 bzw. der Zwischenplatte 32 zugewandt ist.

Wie in Fig. 5 dargestellt, weist die Nabe 34, die unverändert über Zwischenplatte 32 und Getriebegehäusewand 31 mit dem Getriebegehäuse 30 verschraubt ist, zusätzlich zu den Druck-Zuführkanälen 104, 105 für die Druckbeaufschlagung der Kolbenräume 48, 88 des ersten und fünften Schaltelementes 40, 80 nunmehr einen Schmiermittel-Zuführkanal 110 auf. Über diesen Schmiermittel-Zuführkanal 110 wird Schmiermittel, das von einem nicht näher dargestellten hydraulischen Steuergerät bereitgestellt wird, zunächst in den Druckausgleichsraum 49 des ersten Schaltelementes 40 gefördert. Von dem Druckausgleichsraum 49 gelangt das Schmiermittel über eine Schmiermittel-Bohrung 111 der Stauscheibe 47 in die Schmiermittel-Kammer 109 und von dort über zentrale und radiale Schmiermittel-Bohrungen der Bolzen 15 zu den Lagern und Verzahnungen der Planetenräder 14 des Planetenradsatzes RS1. Der Verlauf dieser Schmiermittel-Zufuhr ist in Fig. 5 mit C bezeichnet.

In einer anderen Ausgestaltung können Nabe 34 und Zwischenplatte 33 auch einstückig ausgeführt sein. In einer weiteren Ausgestaltung kann auch vorgesehen sein, daß die Nabe 34 in die Getriebegehäusewand 31 integriert ist, als ein zylindrischer Vorsprung, der sich axial in Richtung des ersten Planetenradsatzes RS1 erstreckt. Selbstverständlich können auch Getriebegehäusewand 31 und Getriebegehäuse 30 einstückig ausgeführt sein.

Die Wirksamkeit des Druckausgleichsraums 49 des ersten Schaltelementes 40 wird bestimmt durch den Außendurchmesser der Stauscheibe 47 und den Teilkreisdurchmesser der Ablaufkante der Schmiermittel-Bohrungen der Bolzen 15 des Planetenradsatzes RS1. Um sicherzustellen, daß dieser gesamte Druckausgleichsraum 49 stets mit Schmiermittel befüllt ist, weist die Schmiermittel-Bohrung 111 der Stauscheibe 47 einem größeren Teilkreisdurchmesser auf als der für den Schmiermittel-Zufluß wirksame Teilkreisdurchmesser die Schmiermittel-Bohrungen der Bolzen 15. Durch eine entsprechende Auslegung der Ablaufquerschnitte der Schmiermittel-Versorgung der Planetenräder 14 des Planetenradsatzes RS1 kann sichergestellt werden, daß der wirksame dynamischer Druck des Druckausgleichsraums 49 nicht durch Staueffekte negativ beeinflußt wird.

Ist in einer anderen Ausgestaltung beispielsweise vorgesehen, daß der Teilkreisdurchmesser der Schmiermittel-Bohrung 111 der Stauscheibe 47 kleiner ist als der für den Schmiermittel-Zufluß wirksame Teilkreisduchmesser der Schmiermittel-Bohrungen der Bolzen 15, so bestimmt der Teilkreisdurchmesser der Schmiermittel-Bohrung 111 der Stauscheibe 47 die wirksame Fläche des Druckausgleichsraums 49.

Ist in Verbindung mit der anhand Fig. 5 erläuterten zweiten erfindungsgemäßen Schmiermittel-Versorgung der Planetenräder des Planetenradsatzes beispielweise eine andere Ausbildung des Planetenradsatzes mit Doppel-Planeten vorgesehen - wie beispielsweise auch in Fig. 4 - , ist es zweckmäßig, die Durchmesser der Schmiermittel-Bohrungen der jeweiligen Bolzen der inneren und äußeren Planetenräder aufeinander abzustimmen, derart, daß der Schmiermittel-Ablauf der Bolzen mit kleinerem Teilkreisdurchmesser zumindest annährend dem Schmiermittel-Ablauf der Bolzen mit größerem Teilkreisdurchmesser entspricht. Beispielsweise kann hierzu die zentrale Schmiermittel-Bohrung der äußeren Bolzen einen geringfügig kleineren Durchmesser aufweisen als die zentrale Schmiermittel-Bohrung der inneren Bolzen. Auf diese Weise wird eine gleichmäßige Schmiermittel-Versorgung aller Planetenräder des Planetenradsatzes aus dem Druckausgleichsraum des Schaltelementes heraus erreicht, der dem Planetenträger unmittelbar benachbart ist.

Als günstige Schmiermittel-Zufuhr zu den Lamellen 41 des ersten Schaltelementes 40 ist gemäß Fig. 5 ein zylinderförmiger Schmiermittel-Topf 112 vorgesehen, der beispielsweise über einen Bajonett-Verschluß mit dem Stegblech 17 verbunden ist und das von dem Planetenradsatz RS1 abspritzende Schmiermittel über entsprechend ausgebildete Durchbrüche 113 des Schmiermittel-Topfes 112 den Lamellen 41 des ersten Schaltelementes 40 zuleitet.

Für den Fachmann ist klar ersichtlich, daß die in Fig. 5 dargestellte Anordnung von erstem Planetenradsatzes RS1, erstem Schaltelement 40 und fünftem Schaltelement 80 mit der in Fig. 2 dargestellten Anordnung des zweiten Planetenradsatzes RS2 und der weiteren Schaltelemente 50, 60 und 70 in einfacher Weise kombinierbar ist.

### Bezugszeichen

- A: Verlauf der Schmiermittel-Zufuhr gemäß dem Stand der Technik
- B: Verlauf der Schmiermittel-Zufuhr gemäß einer beispielhaften ersten erfindungsgemäßen Lösung
- C: Verlauf der Schmiermittel-Zufuhr gemäß einer beispielhaften zweiten erfindungsgemäßen Lösung

- RS1: erster Planetenradsatz
- RS2: zweiter Planetenradsatz

- n_ein: Getriebe-Eingangsdrehzahl
- n_rs1: Ausgangsdrehzahl des ersten Planetenradsatzes
- n_rs2: Ausgangsdrehzahl des zweiten Planetenradsatzes, Getriebe-Abtriebsdrehzahl

- 1: Motorwelle
- 2: Drehmomentwandler
- 3: Antriebswelle
- 4: Abtriebswelle
- 5: Stegwelle des zweiten Planetenradsatzes
- 6: erste Sonnenwelle des zweiten Planetenradsatzes
- 7: zweite Sonnenwelle des zweiten Planetenradsatzes

- 10: Sonnenrad des ersten Planetenradsatzes
- 11: inneres Planetenrad des ersten Planetenradsatzes
- 12: Bolzen des inneren Planetenrades des ersten Planetenradsatzes
- 13: Steg der inneren Planetenräder des ersten Planetenradsatzes
- 14: äußeres Planetenrad des ersten Planetenradsatzes
- 15: Bolzen des äußeren Planetenrades des ersten Planetenradsatzes
- 16: Steg der äußeren Planetenräder des ersten Planetenradsatzes
- 17: Stegblech des ersten Planetenradsatzes
- 18: Abdichtelement des Stegblechs
- 19: Hohlrad des ersten Planetenradsatzes

- 20: kleines Sonnenrad des zweiten Planetenradsatzes
- 21: großes Sonnenrad des zweiten Planetenradsatzes
- 22: erstes Planetenrad des zweiten Planetenradsatzes
- 23: zweites Planetenrad des zweiten Planetenradsatzes
- 24: Steg des ersten Planetenrades des zweiten Planetenradsatzes
- 25: Steg des zweiten Planetenrades des zweiten Planetenradsatzes
- 26: Hohlrad des zweiten Planetenradsatzes

- 30: Getriebegehäuse
- 31: Getriebegehäusewand
- 32: zylindrischer Vorsprung der Getriebegehäusewand
- 33: zwischenplatte
- 34: Nabe

- 40: erstes Schaltelement
- 41: Lamellen des ersten Schaltelementes
- 42: Außenlamellenträger des ersten Schaltelementes
- 43: Innenlamellenträger des ersten Schaltelementes
- 44: Servo-Einrichtung des ersten Schaltelementes
- 45: Kolben des ersten Schaltelementes
- 46: Kolben-Rückstellfeder des ersten Schaltelementes
- 47: Stauscheibe des ersten Schaltelementes
- 48: Kolbenraum des ersten Schaltelementes
- 49: Druckausgleichsraum des ersten Schaltelementes

- 50: zweites Schaltelement
- 51: Lamellen des zweiten Schaltelementes
- 52: Außenlamellenträger des zweiten Schaltelementes
- 53: Innenlamellenträger des zweiten Schaltelementes
- 54: Servo-Einrichtung des zweiten Schaltelementes
- 55: Kolben des zweiten Schaltelementes
- 56: Kolben-Rückstellfeder des zweiten Schaltelementes
- 57: Stauscheibe des zweiten Schaltelementes'
- 58: Kolbenraum des zweiten Schaltelementes
- 59: Druckausgleichsraum des zweiten Schaltelementes

- 60: drittes Schaltelement
- 63: Innenlamellenträger des dritten Schaltelementes
- 64: Servo-Einrichtung des dritten Schaltelementes

- 70: viertes Schaltelement
- 74: Servo-Einrichtung des vierten Schaltelementes

- 80: fünftes Schaltelement
- 81: Lamellen des fünften Schaltelementes
- 82: Außenlamellenträger des fünften Schaltelementes
- 83: Innenlamellenträger des fünften Schaltelementes
- 84: Servo-Einrichtung des fünften Schaltelementes
- 85: Kolben des fünften Schaltelementes
- 86: Kolben-Rückstellfeder des fünften Schaltelementes
- 87: Stauscheibe des fünften Schaltelementes
- 88: Kolbenraum des fünften Schaltelementes
- 89: Druckausgleichsraum des fünften Schaltelementes
- 90: scheibenförmiger Abschnitt des Außenlamellenträgers des fünften Schaltelementes
- 100: zentrale Schmiermittel-Zuführbohrung der Antriebswelle
- 101: Schmiermittel-Zuführbohrung der Antriebswelle zu den Planetenrädern des ersten Planetenradsatzes und zum Druckausgleichsraum des ersten Schaltelementes
- 102: Schmiermittel-Zuführbohrung des Außenlamellenträgers des ersten Schaltelementes zum Druckausgleichsraum des ersten Schaltelementes
- 103: Schmiermittel-Zuführbohrung der Antriebswelle zum Druckausgleichsraum des fünften Schaltelementes
- 104: Druck-Zuführkanal der Nabe zum Kolbenraum des ersten Schaltelementes
- 105: Druck-zuführkanal der Nabe zum Kolbenraum des fünften Schaltelementes
- 106: Druck-Zuführbohrung des Außenlamellenträgers des ersten Schaltelementes zum Kolbenraum des ersten Schaltelementes
- 107: Druck-Zuführbohrung der Antriebswelle zum Kolbenraum des fünften Schaltelementes
- 108: Schmiermittel-Fangblech
- 109: Schmiermittel-Kammer
- 110: Schmiermittel-Zuführkanal der Nabe zu den Planetenrädern des ersten Planetenradsatzes
- 111: Schmiermittel-Bohrung der Stauscheibe des ersten Schaltelementes
- 112: Schmiermittel-Topf des ersten Schaltelementes
- 113: Durchbruch des Schmiermittel-Topfes des ersten Schaltelementes

## Patentansprüche

1. Planetengetriebe mit mindestens einem ersten Planetenradsatz (RS1), welcher einen Planetenträger mit Ptanetenradem (11, 14) aufweist, die über fest mit dem Planetenträger verbundene Bolzen (12, 15) verdrehbar gelagert sind, wobei eine Stirnseite des Planetenträgers als ein Stegblech (17) ausgebildet ist, von dessen Außenseite her den Planetenrädern (11, 14) Schmiermittel über Schmiermittel-Bohrungen der Bolzen (12,15) zugeführt wird, sowie mit einem axial zum Stegblech (17) unmittelbar benachbarten Bauelement, weiches keine Relativdrehzahl zu dem Stegblech (17) aufweist, **dadurch gekennzeichnet , dass** das zum Stegblech (17) axial unmittelbar benachbarten Bauelement ein Bauelement eines Schaltelementes ist, und dass zwischen dem Stegblech (17) und dem axial zum Stegblech (17) unmittelbar benachbarten Bauelement des Schaltelementes auf einem Durchmesser oberhalb der Bolzen (12, 15) ein statisch abdichtendes Dichtelement (18) angeordnet ist, derart, dass zwischen dem Stegblech (17) und dem axial zum Stegblech (17) unmittelbar benachbarten Bauelement des Schaltelementes eine Schmiermittel-Kammer (109) gebildet wird, wobei für die Schmiermittel-Zufuhr (B, C) zu den Planetenrädern (11, 14) das Schmiermittel in diese Schmiermittel-Kammer (109) gefördert, in der Schmiermittel-Kammer (109) aufgestaut und von der Schmiermittel-Kammer (109) den Schmiermittel-Bohrungen der Bolzen (12, 15) zugeführt wird.

2. Planetengetriebe nach Anspruch 1, **dadurch gekennzeichnet, dass** das Dichtelement (18) ein O-Ring ist.

3. Planetengetriebe nach Anspruch 1, **dadurch gekennzeichnet, dass** das Dichtelement (18) ein Lippendichtring ist

4. Planetengetriebe nach Anspruch 1 oder 3, **dadurch gekennzeichnet, dass** das Dichtelement (18) einen rechteckigen oder trapezförmigen Querschnitt aufweist.

5. Planetengetriebe nach einem der Ansprüche 1 bis 4, **dadurch gekennzeichnet, dass** das Dichtelement (18) in einer Radialnut des Stegblechs (17) und/oder in einer Radialnut des axial zum Stegblech (17) unmittelbar benachbarten Bauelementes angeordnet ist.

6. Planetengetriebe nach einem der Ansprüche 1 bis 4, **dadurch gekennzeichnet, dass** das Dichtelement (18) in einer Axialnut des Stegblechs (17) und/oder in einer Axialnut des axial zum Stegblech (17) unmittelbar benachbarten Bauelementes angeordnet ist

7. Planetengetriebe nach Anspruch 1, **dadurch gekennzeichnet, dass** das Dichtelement (18) eine Flachdichtung ist.

8. Planetengetriebe nach Anspruch 1, **dadurch gekennzeichnet, dass** das Stegblech (17) auf einem Durchmesser oberhalb der Bolzen (12, 15) mit dem axial zum Stegblech (17) unmittelbar benachbarten Bauelement schmiermitteldicht verklebt ist.

9. Planetengetriebe nach einem der Ansprüche 1 bis 8, **dadurch gekennzeichnet, dass** das der erste Planetenradsatz (RS1) als Plus-Getriebe ausgebildet ist, mit einem Sonnenrad (10), welches an einem Getriebegehäuse (30) des Planetengetriebes festgesetzt ist, mit einem Hohlrad (19), welches das Ausgangselement des ersten Planetenradsatzes (RS1) bildet, und mit inneren und äußeren Planetenrädern (11, 14), deren Stege (13, 16) als Stegblech (17) fest miteinander verbunden sind, wobei das Stegblech (17) das Eingangselement des ersten Planetenradsatzes (RS1) bildet und mit einer Antriebswelle (3) verbunden ist, dass ein Eingangselement eines fünften Schaltelementes (80), insbesondere ein Außenlamellenträger (82) des fünften Schaltelementes (80), axial an den ersten Planetenradsatz (RS1) angrenzt und ebenfalls mit der Antriebswelle (3) verbunden ist, und dass das Dichtelement (18) auf einem Durchmesser oberhalb der Bolzen (12, 15) der inneren und äußeren Planetenräder (11, 14) axial zwischen dem Stegblech (17) und dem Eingangselement des fünften Schaltelementes (80) angeordnet ist.

10. Planetengetriebe nach einem der Ansprüche 1 bis 8, **dadurch gekennzeichnet, dass** das der erste Planetenradsatz (RS1) als Minus-Getriebe ausgebildet ist, mit einem Sonnenrad (10), welches an einem Getriebegehäuse (30) des Planetengetriebes festgesetzt ist, mit einem Hohlrad (19), welches das Eingangselement des ersten Planetenradsatzes (RS1) bildet, und mit Planetenrädern (14), deren Stegblech (17) das Ausgangselement des ersten Planetenradsatzes (RS1) bildet, dass ein Außenlamellenträger (42) als Eingangselement eines ersten Schaltelementes (40) axial benachbart zum ersten Planetenradsatz (RS1) angeordnet ist und mit dem Stegblech (17) verbunden ist, wobei eine Stauscheibe (47) einer Servo-Einrichtung (44) des ersten Schaltelementes (40) axial unmittelbar an das Stegblech (17) angrenzt, und dass das Dichtelement (18) auf einem Durchmesser oberhalb der Bolzen (15) der Planetenräder (14) axial zwischen dem Stegblech (17) und der Stauscheibe (47) angeordnet ist.

11. Planetengetriebe nach Anspruch 9 oder 10, **dadurch gekennzeichnet, dass** das Planetengetriebe einen ersten und einen zweiten Planetenradsatz (RS1, RS2) und insgesamt fünf Schaltelemente (40, 50, 60, 70, 80) aufweist, wobei durch selektives Schließen der fünf Schaltelemente (40, 50, 60, 70, 80) sechs Vorwärtsgängen schaltbar sind und eine Getriebe-Eingangsdrehzahl (n_ein) der Antriebswelle (3) derart auf eine Abtriebswelle (4) des Planetengetriebes übertragbar ist, dass zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird, und wobei der zweite Planetenradsatz (RS2) drei nicht gekoppelte Eingangselemente aufweist, wobei das erste Eingangselement des zweiten Planetenradsatzes (RS2) über das erste Schaltelement (40) mit dem Ausgangselement des ersten Planetenradsatzes (RS1) verbindbar ist, das zweite Eingangsetement des zweiten Planetenradsatzes (RS2) über das zweite Schaltelement (50) mit dem Ausgangselement des ersten Planetenradsatzes (RS1) verbindbar und über das dritte Schaltelement (60) an dem Getriebegehäuse (30) festsetzbar ist, und das dritten Eingangselement des zweiten Planetenradsatzes (RS2) über das fünfte Schaltelement (80) mit der Antriebswelle verbindbar und über das vierte Schaltelement (70) an dem Getriebegehäuse (30) festsetzbar ist, und wobei ein Ausgangselement des zweiten Planetenradsatzes (RS2) mit der Abtriebswelle (4) verbunden ist.

12. Planetengetriebe nach Anspruch 11, **dadurch gekennzeichnet, dass** der erste Planetenradsatz (RS1) nahe einer Getriebegehäusewand (31) des Getriebegehäuses (30) angeordnet ist, in radialer Richtung zumindest teilweise oberhalb eines zylindrischen Vorsprungs (32) der Getriebegehäusewand (31) oder einer fest mit der Getriebegehäusewand (31) verbunden Nabe (34), wobei die Getriebegehäusewand (31) als Teil des Getriebegehäuses (30) oder als eine mit dem Getriebegehäuse (30) fest verbundenen Zwischenplatte (33) ausgebildet ist, und wobei das Sonnenrad (10) des ersten Planetenradsatzes (RS1) mit dem Vorsprung (32) bzw. der Nabe (34) wirkverbunden ist.

13. Planetengetriebe nach Anspruch 12, **dadurch gekennzeichnet, dass** die Getriebegehäusewand (31) an der Seite des Getriebegehäuses (30) angeordnet ist, die einer mit der Antriebswelle (3) wirkverbundenen Motorwelle (1) eines Antriebsmotors des Planetengetriebes zugewandt ist.

14. Planetengetriebe nach einem der Ansprüche 11 bis 13, **dadurch gekennzeichnet, dass** der erste Planetenradsatz (RS1) und das erste, zweite und fünfte Schaltelement (40, 50, 80) zusammen angeordnet sind, auf einer Seite des zweiten Planetenradsatzes (RS2).

15. Planetengetriebe nach einem der Ansprüche 11 bis 14, **dadurch gekennzeichnet, dass** das fünfte Schaltelement (80) zwischen dem ersten Planetenradsatz (RS1) und dem zweiten Planetenradsatz (RS2) angeordnet ist, in axialer Richtung unmittelbar angrenzend an den ersten Planetenradsatz (RS1).

16. Planetengetriebe nach einem der Ansprüche 11 bis 15, **dadurch gekennzeichnet, dass** das zweite Schattetement (50) näher am zweiten Planetenradsatz (RS2) angeordnet ist als das erste Schaltelement (40), insbesondere dass Lamellen (51) des zweiten Schaltelementes (50) näher am zweiten Planetenradsatz (RS2) angeordnet sind als Lamellen (41) des ersten Schaltelementes (40).

17. Planetengetriebe nach einem der Ansprüche 11 bis 16, **dadurch gekennzeichnet, dass** das erste Schaltelement (40) unmittelbar benachbart zum ersten Planetenradsatz (RS1) angeordnet ist, insbesondere dass die Lamellen (41) des ersten Schaltelementes (40) und/oder die Servo-Einrichtung (44) des ersten Schaltelementes (40) unmittelbar benachbart zum ersten Planetenradsatz (RS1) angeordnet sind.

18. Planetengetriebe nach einem der Ansprüche 11 bis 17, **dadurch gekennzeichnet, dass** die Lamellen (41) des ersten Schaltelementes (40) zumindest teilweise radial oberhalb des ersten Planetenradsatzes (RS1) angeordnet sind.

19. Planetengetriebe nach einem der Ansprüche 11 bis 18, **dadurch gekennzeichnet, dass** die Lamellen (51) des zweiten Schaltelementes (50) axial in Richtung des zweiten Planetenradsatzes (RS2) an die Lamellen (41) des ersten Schaltelementes (40) angrenzen.

20. Planetengetriebe nach einem der Ansprüche 11 bis 19, **dadurch gekennzeichnet, dass** die Lamellen (51) des zweiten Schaltelementes (50) zumindest teilweise radial oberhalb des fünften Schaltelementes (80) angeordnet sind, insbesondere zumindest teilweise oberhalb der Lamellen (81) des fünften Schaltelementes (80).

21. Planetengetriebe nach einem der Ansprüche 11 bis 20, **dadurch gekennzeichnet, dass** die Servo-Einrichtung (44) des ersten Schaltelementes (40) zumindest teilweise auf der dem zweiten Planetenradsatz (RS2) abgewandten Seite des ersten Planetenradsatzes (RS1) angeordnet ist, insbesondere radial oberhalb des zylindrischen Vorsprungs (32) der Getriebegehäusewand (31) bzw. radial oberhalb des mit der Getriebegehäusewand (31) verbunden Nabe (34), angrenzend an den ersten Planetenradsatz (RS1).

22. Planetengetriebe nach Anspruch 21, **dadurch gekennzeichnet, dass** die Servò-Einrichtung (44) des ersten Schaltelementes (40) die Lamellen (41) des ersten Schaltelementes (40) von deren dem zweiten Planetenradsatz (RS2) abgewandten Seite her betätigt.

23. Planetengetriebe nach einem der Ansprüche 11 bis 22, **dadurch gekennzeichnet, dass** das Hohlrad (19) des ersten Planetenradsatzes (RS1) mit einem Außenlamellenträger (42) des ersten Schaltelementes (40) und mit einem Innenlamellenträger (53) des zweiten Schaltelementes (50) verbunden ist

24. Planetengetriebe nach einem der Ansprüche 11 bis 23, **dadurch gekennzeichnet, dass** ein Eingangselement des ersten Schaltelementes (40), insbesondere der Außenlamellenträger (42) des ersten Schaltelementes (40), auf dem zylindrischen Vorsprung (32) der Getriebegehäusewand (31) bzw. auf der mit der Getriebegehäusewand (31) verbunden Nabe (34) gelagert ist.

25. Planetengetriebe nach Anspruch 24, **dadurch gekennzeichnet, dass** in dem zylindrischen Vorsprung (32) der Getriebegehäusewand (31) bzw. in der mit der Getriebegehäusewand (31) verbunden Nabe (34) mindestens ein Druck-Zuführkanal (104) für eine Druckrnittel-Zufuhr zu der Servo-Einrichtung (44) des ersten Schaltelementes (40) angeordnet ist.

26. Planetengetriebe nach einem der Ansprüche 11 bis 25, **dadurch gekennzeichnet, dass** ein Ausgangselement des ersten Schaltelementes (40) das fünfte Schaltelement (80) in axialer Richtung radial übergreift.

27. Mehrstufengetriebe nach einem der Ansprüche 11 bis 26, **dadurch gekennzeichnet, dass** das Ausgangselement des ersten Schaltelementes (40) einen Kupplungsraum des zweiten Schaltelementes (50) durchgreift.

28. Planetengetriebe nach einem der Ansprüche 11 bis 27, **dadurch gekennzeichnet, dass** eine Servo-Einrichtung (54) des zweiten Schaltelementes (50) auf der dem zweiten Planetenradsatz (RS2) zugewandten Seite der Lamellen (51) des zweiten Schaltelementes (50) angeordnet ist.

29. Planetengetriebe nach Anspruch 28, **dadurch gekennzeichnet, dass** die Servo-Einrichtung (54) des zweiten Schaltelementes (50) die Lamellen (51) des zweiten Schaltelementes (50) von deren dem zweiten Planetenradsatz (RS2) zugewandten Seite her betätigt.

30. Planetengetriebe nach einem der Ansprüche 11 bis 29, **dadurch gekennzeichnet, dass** das dritte Eingangselement des zweiten Planetentradsatzes (RS2) über eine Stegwelle (5) mit einem Ausgangselement des fünften Schaltelementes (80) verbunden ist, dass das erste Eingangselement des zweiten Planetentradsatzes (RS2) über eine erste Sonnenwelle (6) mit einem Ausgangselement des ersten Schaltelementes (40) verbunden ist, und dass das zweite Eingangselement des zweiten Planetenradsatzes (RS2) über eine zweite Sonnenwelle (7) mit einem Ausgangselement des zweiten Schaltelementes (50) verbunden ist, wobei die Stegwelle (5) zentrisch durch den zweiten Planetenradsatz (RS2) hindurch geführt ist, und wobei die erste Sonnenwelle (6) zwischen dem ersten und zweiten Planetenradsatz (RS1, RS2) radial oberhalb der Stegwelle (5) verläuft und/oder auf dieser gelagert ist, und wobei die zweite Sonnenwelle (7) dem ersten und zweiten Planetenradsatz (RS1, RS2)) radial oberhalb der ersten Sonnenwelle (6) verläuft und/oder auf dieser gelagert ist.

31. Planetengetriebe nach einem der Ansprüche 11 bis 30, **dadurch gekennzeichnet, dass** der zweite Planetenradsatz (RS2) als Ravigneaux-Planetenradsatz ausgebildet ist, mit einem kleinen Sonnenrad (20) als erstes Eingangselement, mit einem großen Sonnenrad (21) als zweites Eingangselement, mit gekoppelten Stegen (24, 25) als drittes Eingangselement, sowie mit einem Hohlrad (26) als Ausgangselement des zweiten Planetenradsatzes (RS2).

32. Planetengetriebe nach einem der vorigen Ansprüche, insbesondere nach Anspruch 10, **dadurch gekennzeichnet, dass** die Antriebswelle (3) Schmiermittel-Zuführbohrungen (100, 101) für die Schmiermittel-Zufuhr (B) zu den Planetenrädern (11, 14) aufweist.

33. Planetengetriebe nach einem der vorigen Ansprüche, insbesondere nach Anspruch 11, **dadurch gekennzeichnet, dass** die getriebegehäusefeste Nabe (34) bzw. der zylindrische Vorsprung (32) der Getriebegehäusewand (31) mindestens einen Schmiermittel Zuführkanal (110) für die Schmiermittel-Zufuhr (C) zu den Planetenrädern (14) aufweist.

34. Planetengetriebe nach Anspruch 33, **dadurch gekennzeichnet, dass** das Schmiermittel von dem Schmiermittel-Zuführkanal (110) der getriebegehäusefesten Nabe (34) bzw. dem zylindrischen Vorsprung (32) der Getriebegehäusewand (31) in den zum Stegblech (17) des ersten Planetenradsatzes (RS1) benachbarten Druckausgleichsraum (49) des ersten Schaltelementes (40) und von diesem Druckausgleichsraum (49) in die Schmiermittel-Kammer (109) erfolgt.

35. Planetengetriebe nach Anspruch 34, **dadurch gekennzeichnet, dass** die Stauscheibe (47) des ersten Schaltelementes (40) mindestens eine Schmiermittel-Bohrung (111) aufweist, über die das Schmiermittel von dem Druckausgleichsraum (49) in die Schmiermittel-Kammer (109) gelangt.

36. Planetengetriebe nach Anspruch 35, **dadurch gekennzeichnet, dass** die Schmiermittel-Bohrung (111) der Stauscheibe (47) des ersten Schaltelementes (40) auf einem Teilkreisdurchmesser der Stauscheibe (47) angeordnet ist, welcher größer ist als der für die Schmiermittel-Zufuhr (C) zu den Planetenrädern (14) des ersten Planetenradsatzes (RS1) wirksame Teilkreisdurchmesser der Schmiermittel-Bohrungen der Bolzen (15) des ersten Planetenradsatzes (RS1).

37. Planetengetriebe nach Anspruch 36, **dadurch gekennzeichnet, dass** die Schmiermittel-Bohrung (111) der Stauscheibe (47) des ersten Schaltelementes (40) auf einem Teilkreisdurchmesser der Stauscheibe (47) angeordnet ist, welcher kleiner oder gleich dem für die Schmiermittel-Zufuhr (C) zu den Planetenrädern (14) des ersten Planetenradsatzes (RS1) wirksamen Teilkreisdurchmesser der Schmiermittel-Bohrungen der. Bolzen (15) des ersten Planetenradsatzes (RS1) ist

## Claims

1. Planetary gear with at least a first planetary gear set (RS1) comprising a planet carrier with planet gears (11, 14), which are mounted by means of bolts (12, 15) fixedly connected to the planet carrier so as to be rotatable, an end face of the planet carrier being provided in the form of a web plate (17), from the external face of which the planet gears (11, 14) are supplied with lubricant via lubricant bores of the bolts (12, 15), and having a component directly axially adjacent to the web plate (17) which does not have a relative speed with respect to the web plate (17), **characterised in that** the component directly axially adjacent to the web plate (17) is a component of a shift element and a statically sealing seal element (18) is disposed on a diameter above the bolts (12, 15) between the web plate (17) and the component of the shift element directly axially adjacent to the web plate (17) so that a lubricant chamber (109) is formed between the web plate (17) and the component of the shift element directly axially adjacent to the web plate (17), and in order to supply lubricant (B, C) to the planet gears (11, 14), lubricant is fed into this lubricant chamber (109), collected in the lubricant chamber (109) and fed from the lubricant chamber (109) to the lubricant bores of the bolts (12, 15) .

2. Planetary gear as claimed in claim 1, **characterised in that** the seal element (18) is an O-ring.

3. Planetary gear as claimed in claim 1, **characterised in that** the seal element (18) is a lipped sealing ring.

4. Planetary gear as claimed in claim 1 or 3, **characterised in that** the seal element (18) has a rectangular or trapezoidally shaped cross-section.

5. Planetary gear as claimed in one of claims 1 to 4, **characterised in that** the seal element (18) is disposed in a radial groove of the web plate (17) and/or in a radial groove of the component directly axially adjacent to the web plate (17).

6. Planetary gear as claimed in one of claims 1 to 4, **characterised in that** the seal element (18) is disposed in an axial groove of the web plate (17) and/or in an axial groove of the component directly axially adjacent to the web plate (17).

7. Planetary gear as claimed in claim 1, **characterised in that** the seal element (18) is a flat seal.

8. Planetary gear as claimed in claim 1, **characterised in that** the web plate (17) is adhered on a diameter above the bolts (12, 15) to the component directly axially adjacent to the web plate (17) in a lubricant-proof arrangement.

9. Planetary gear as claimed in one of claims 1 to 8, **characterised in that** the first planetary gear set (RS1) is a plus gear with a sun gear (10) which is fixedly connected to a transmission housing (30) of the planetary gear, with an annulus (19) constituting the output element of the first planetary gear set (RS1) and with inner and outer planet gears (11, 14), the spiders (13, 16) of which are fixedly connected to one another constituting the web plate (17), which web plate (17) forms the input element of the first planetary gear set (RS1) and is connected to a drive shaft (3), an input element of the fifth shift element (80), in particular an outer disc carrier (82) of the fifth shift element (80) axially adjoins the first planetary gear set (RS1) and is also connected to the drive shaft (3), and the seal element (18) is disposed on a diameter above the bolts (12, 15) of the inner and outer planet gears (11, 14) axially between the web plate (17) and the input element of the fifth shift element (80).

10. Planetary gear as claimed in one of claims 1 to 8, **characterised in that** the first planetary gear set (RS1) is a minus gear with a sun gear (10) which is fixedly connected to a transmission housing (30) of the planetary gear, with an annulus (19) constituting the input element of the first planetary gear set (RS1) and with planet gears (14), the web plate (17) of which constitutes the output element of the first planetary gear set (RS1), an outer disc carrier (42) constituting the input element of a first shift element (40) is disposed axially adjacent to the first planetary gear set (RS1) and is connected to the web plate (17), and a baffle plate (47) of a servo-unit (44) of the first shift element (40) directly axially adjoins the web plate (17), and the seal element (18) is disposed on a diameter above the bolts (15) of the planet gears (14) axially between the web plate (17) and the baffle plate (47).

11. Planetary gear as, claimed in claim 9 or 10, **characterised in that** the planetary gear has a first and a second planetary gear set (RS1, RS2) and a total of five shift elements (40, 50, 60, 70, 80), whereby six forward speeds can be shifted by selectively closing the five shift elements (40, 50, 60, 70, 80), and a transmission input speed (n_in) of the drive shaft (3) can be transmitted to an output shaft (4) of the planetary gear such that, in order to shift from one speed to the next highest or next lowest speed, only one shift element of the shift elements being actuated is respectively opened and another shift element is closed, and whereby the second planetary gear set (RS2) has three non-coupled input elements, it being possible to connect the first input element of the second planetary gear set (RS2) via the first shift element (40) to the output element of the first planetary gear set (RS1) whilst the second input element of the second planetary gear set (RS2) can be connected via the second shift element (50) to the output element of the first planetary gear set (RS1) and can be immobilised on the transmission housing (30) by means of the third shift element (60), and the third input element of the second planetary gear set (RS2) can be connected by means of the fifth shift element (80) to the drive shaft and can be immobilised by means of the fourth shift element (70) on the transmission housing (30), and an output element of the second planetary gear set (RS2) is connected to the output shaft (4).

12. Planetary gear as claimed in claim 11, **characterised in that** the first planetary gear set (RS1) is disposed close to a transmission housing wall (31) of the transmission housing (30), at least partially above a cylindrical projection (32) of the transmission housing wall (31) in the radial direction or a hub (34) fixedly connected to the transmission housing wall (31), which transmission housing wall (30) is provided as part of the transmission housing (30) or in the form of an intermediate plate (33) fixedly connected to the transmission housing (30), and the sun gear (10) of the first planetary gear set (RS1) is actively connected to the projection (32) or to the hub (34).

13. Planetary gear as claimed in claim 12, **characterised in that** the transmission housing wall (31) is disposed on the side of the transmission housing (30) facing an engine shaft (1) of a drive engine of the planetary gear actively connected to the drive shaft (3).

14. Planetary gear as claimed in one of claims 11 to 13, **characterised in that** the first planetary gear set (RS1) and the first, second and fifth shift elements (40, 50, 80) are disposed together, on one side of the second planetary gear set (RS2).

15. Planetary gear as claimed in one of claims 11 to 14, **characterised in that** the fifth shift element (80) is disposed between the first planetary gear set (RS1) and the second planetary gear set (RS2), directly adjoining the first planetary gear set (RS1) in the axial direction.

16. Planetary gear as claimed in one of claims 11 to 15, **characterised in that** the second shift element (50) is disposed closer to the second planetary gear set (RS2) than the first shift element (40), in particular discs (51) of the second shift element (50) are disposed closer to the second planetary gear set (RS2) than discs (41) of the first shift element (40).

17. Planetary gear as claimed in one of claims 11 to 16, **characterised in that** the first shift element (40) is disposed directly adjacent to the first planetary gear set (RS1), in particular the discs (41) of the first shift element (40) and/or the servo-unit (44) of the first shift element (40) are disposed directly adjacent to the first planetary gear set (RS1).

18. Planetary gear as claimed in one of claims 11 to 17, **characterised in that** the discs (41) of the first shift element (40) are disposed at least partially radially above the first planetary gear set (RS1).

19. Planetary gear as claimed in one of claims 11 to 18, **characterised in that** the discs (51) of the second shift element (50) axially adjoin the discs (41) of the first shift element (40) in the direction of the second planetary gear set (RS2).

20. Planetary gear as claimed in one of claims 11 to 19, **characterised in that** the discs (51) of the second shift element (50) are disposed at least partially radially above the fifth shift element (80), in particular at least partially above the discs (81) of the fifth shift element (80).

21. Planetary gear as claimed in one of claims 11 to 20, **characterised in that** the servo-unit (44) of the first shift element (40) are disposed at least partially on the side of the first planetary gear set (RS1) remote from the second planetary gear set (RS2), in particular radially above the cylindrical projection (32) of the transmission housing wall (31) or radially above the hub (34) connected to the transmission housing wall (31), adjoining the first planetary gear set (RS1).

22. Planetary gear as claimed in claim 21, **characterised in that** the servo-unit (44) of the first shift element (40) operates the discs (41) of the first shift element (40) from their side remote from the second planetary gear set (RS2).

23. Planetary gear as claimed in one of claims 11 to 22, **characterised in that** the annulus (19) of the first planetary gear set (RS1) is connected to an outer disc carrier (42) of the first shift element (40) and to an inner disc carrier (53) of the second shift element (50).

24. Planetary gear as claimed in one of claims 11 to 23, **characterised in that** an input element of the first shift element (40), in particular the outer disc carrier (42) of the first shift element (40), is mounted on the cylindrical projection (32) of the transmission housing wall (31) or on the hub (34) connected to the transmission housing wall (31).

25. Planetary gear as claimed in claim 24, **characterised in that** at least one pressure inlet passage (104) for a pressurising medium supply to the servo-unit (44) of the first shift element (40) is provided in the cylindrical projection (32) of the transmission housing wall (31) or in the hub (34) connected to the transmission housing wall (31).

26. Planetary gear as claimed in one of claims 11 to 25, **characterised in that** an output element of the first shift element (40) extends radially beyond the fifth shift element (80) in the axial direction.

27. Multi-stage gear as claimed in one of claims 11 to 26, **characterised in that** the output element of the first shift element (40) extends through a clutch space of the second shift element (50).

28. Planetary gear as claimed in one of claims 11 to 27, **characterised in that** a servo-unit (54) of the second shift element (50) is disposed on the side of the discs (51) of the second shift element (50) facing the second planetary gear set (RS2).

29. Planetary gear as claimed in claim 28, **characterised in that** the servo unit (54) of the second shift element (50) operates the discs (51) of the second shift element (50) from their side facing the second planetary gear set (RS2).

30. Planetary gear as claimed in one of claims 11 to 29, **characterised in that** the third input element of the second planetary gear set (RS2) is connected via a spider shaft (5) to an output element of the fifth shift element (80), the first input element of the second planetary gear set (RS2) is connected via a first sun shaft (6) to an output element of the first shift element (40) and the second input element of the second planetary gear set (RS2) is connected via a second sun shaft (7) to an output element of the second shift element (50), whilst the spider shaft (5) extends centrally through the second planetary gear set (RS2), and the first sun shaft (6) extends between the first and second planetary gear set (RS1, RS2) radially above the spider shaft (5) and/or is mounted on the latter, and the second sun shaft (7) extends towards the first and second planetary gear set (RS1, RS2) radially above the first sun shaft (6) and/or is mounted on the latter.

31. Planetary gear as claimed in one of claims 11 to 30, **characterised in that** the second planetary gear set (RS2) is provided in the form of a Ravigneaux planetary gear set with a small sun gear (20) constituting a first input element, with a large sun gear (21) constituting a second input element, coupled spiders (24, 25) as a third input element and an annulus (26) constituting an output element of the second planetary gear set (RS2).

32. Planetary gear as claimed in one of the preceding claims, in particular claim 10, **characterised in that** the drive shaft (3) has lubricant inlet bores (100, 101) for the lubricant supply (B) to the planet gears (11, 14).

33. Planetary gear as claimed in one of the preceding claims, in particular claim 11, **characterised in that** the hub (34) secured to the transmission housing or the cylindrical projection (32) of the transmission housing wall (31) has at least one lubricant inlet passage (110) for the lubricant supply (C) to the planet gears (14).

34. Planetary gear as claimed in claim 33, **characterised in that** lubricant is delivered from the lubricant inlet passage (110) of the hub (34) secured to the transmission housing or the cylindrical projection (32) of the transmission housing wall (31) to the pressure compensation chamber (49) of the first shift-element (40) adjacent to the web plate (17) of the first planetary gear set (RS1) and from this pressure compensation chamber (49) into the lubricant chamber (109) .

35. Planetary gear as claimed in claim 34, **characterised in that** the baffle plate (47) of the first shift element (40) has at least one lubricant bore (111) through which the lubricant passes from the pressure compensation chamber (49) into the lubricant chamber (109) .

36. Planetary gear as claimed in claim 35, **characterised in that** the lubricant bore (111) of the baffle plate (47) of the first shift element (40) is disposed on a pitch diameter of the baffle plate (47) which is bigger than the effective pitch diameter of the lubricant bores of the bolts (15) of the first planetary gear set (RS1) for the lubricant supply (C) to the planet gears (14) of the first planetary gear set (RS1) .

37. Planetary gear as claimed in claim 36, **characterised in that** the lubricant bore (111) of the baffle plate (47) of the first shift element (40) is disposed on a pitch diameter of the baffle plate (47) which is smaller than or identical to the effective pitch diameter of the lubricant bores of the bolts (15) of the first planetary gear set (RS1) for the lubricant supply (C) to the planet gears (14) of the first planetary gear set (RS1).

## Revendications

1. Boîte de vitesses épicycloïdale comportant au moins un premier train épicycloïdal (RS1) qui comprend un porte-satellites portant des roues satellites (11, 14) qui sont montées rotatives par l'intermédiaire d'axes (12, 15) solidaires du porte-satellites, dans laquelle un côté frontal du porte-satellites est constitué par une plaque porteuse (17) à partir du côté extérieur de laquelle du lubrifiant est acheminé aux roues satellites (11, 14) en passant par des alésages de lubrifiant des axes (12, 15), ainsi qu'un composant immédiatement adjacent à la plaque porteuse (17) dans la direction axiale et qui ne présente pas de rotation relative par rapport à la plaque porteuse (17), **caractérisée en ce que** le composant immédiatement adjacent à la plaque porteuse (17) dans la direction axiale est un composant d'un élément de commande et, entre la plaque porteuse (17) et le composant de l'élément de commande immédiatement adjacent à la plaque porteuse (17) dans la direction axiale, un élément d'étanchéité (18) réalisant une étanchéité statique est disposé sur un diamètre situé au-dessus des axes (12, 15) de telle sorte qu'une chambre de lubrifiant (109) est formée entre la plaque porteuse (17) et le composant de l'élément de commande qui est immédiatement adjacent à la plaque porteuse (17) dans la direction axiale, le lubrifiant étant refoulé dans cette chambre de lubrifiant (109) pour l'amenée de lubrifiant (B, C) aux roues satellites (11, 14), accumulé dans la chambre de lubrifiant (109) et acheminé de la chambre de lubrifiant (109) aux alésages de lubrifiant des axes (12, 15).

2. Boîte de vitesses épicycloïdale selon la revendication 1, **caractérisée en ce que** l'élément d'étanchéité (18) est une bague torique.

3. Boîte de vitesses épicycloïdale selon la revendication 1, **caractérisée en ce que** l'élément d'étanchéité (18) est une bague d'étanchéité à lèvre.

4. Boîte de vitesses épicycloïdale selon la revendication 1 ou 3, **caractérisée en ce que** l'élément d'étanchéité (18) présente une section rectangulaire ou en trapèze.

5. Boîte de vitesses épicycloïdale selon l'une des revendications 1 à 4, **caractérisée en ce que** l'élément d'étanchéité (18) est disposé dans une gorge radiale de la plaque porteuse (17) et/ou dans une gorge radiale du composant immédiatement adjacent à la plaque porteuse (17) dans la direction axiale.

6. Boîte de vitesses épicycloïdale selon l'une des revendications 1 à 4, **caractérisée en ce que** l'élément d'étanchéité (18) est disposé dans une gorge axiale de la plaque porteuse (17) et/ou dans une gorge axiale du composant immédiatement adjacent à la plaque porteuse (17) dans la direction axiale.

7. Boîte de vitesses épicycloïdale selon la revendication 1, **caractérisée en ce que** l'élément d'étanchéité (18) est un joint plat.

8. Boîte de vitesses épicycloïdale selon la revendication 1, **caractérisée en ce que** la plaque porteuse (17) est collée, en formant un joint étanche au lubrifiant, au composant immédiatement adjacent à la plaque porteuse (17) dans la direction axiale, sur un diamètre situé au-dessus des axes (12, 15).

9. Boîte de vitesses épicycloïdale selon l'une des revendications 1 à 8, **caractérisée en ce que** le premier train épicycloïdal (RS1) est constitué par un mécanisme multiplicateur, comprenant une roue planétaire (10) qui est bloquée sur un carter (30) de la boîte de vitesses épicycloïdale, une roue planétaire (19) qui forme l'élément de sortie du premier train épicycloïdal (RS1) et des roues satellites intérieures et extérieures (11, 14) dont les porte-satellites (13, 16) sont reliés solidairement entre eux sous la forme d'une plaque porteuse (17), la plaque porteuse (17) formant l'élément d'entrée du premier train épicycloïdal (RS1) et étant reliée à un arbre d'entrée (3), **en ce qu'**un élément d'entrée d'un cinquième élément de commande (80), en particulier un support de disques extérieurs (82) du cinquième élément de commande (80) est axialement adjacent au premier train épicycloïdal (RS1) et est aussi relié à l'arbre d'entrée (3), et **en ce que** l'élément d'étanchéité (18) est disposé sur un diamètre situé au-dessus des axes (12, 15) des roues satellites intérieures et extérieures (11, 14), et axialement entre la plaque porteuse (17) et l'élément d'entrée du cinquième élément de commande (80).

10. Boîte de vitesses épicycloïdale selon l'une des revendications 1 à 8, **caractérisée en ce que** le premier train épicycloïdal (RS1) est constitué par un mécanisme réducteur, comprenant une roue planétaire (10) qui est bloquée sur un carter (30) de la boîte de vitesses épicycloïdale, une couronne à denture intérieure (19) qui forme l'élément d'entrée du premier train épicycloïdal (RS1) et des roues satellites (14) dont la plaque porteuse (17) forme l'élément de sortie du premier train épicycloïdal (RS1), **en ce qu'**un support de disques extérieurs (42), constituant l'élément d'entrée d'un premier élément de commande (40) est axialement adjacent au premier train épicycloïdal (RS1) et est relié à la plaque porteuse (17), un disque de retenue (47) d'un servodispositif (44) du premier élément de commande (40) étant immédiatement adjacent à la plaque porteuse (17) dans la direction axiale, et **en ce que** l'élément d'étanchéité (18) est disposé, sur un diamètre situé au-dessus des axes (15) des roues satellites (14), axialement entre la plaque porteuse (17) et le disque de retenue (47).

11. Boîte de vitesses épicycloïdale selon la revendication 9 ou 10, **caractérisée en ce que** la boîte de vitesses épicycloïdale comprend un premier et un second train épicydoïdal (RS1, RS2) et au total cinq éléments de commande (40, 50, 60, 70, 80), six vitesses de marche avant pouvant être enclenchées par fermeture sélective des cinq éléments de commande (40, 50, 60, 70, 80) et une vitesse de rotation d'entrée de la boîte de vitesses (n_ein) de l'arbre d'entrée (3) pouvant être transmise à un arbre de sortie (4) de la boîte de vitesses épicycloïdale, **en ce que**, pour passer d'une vitesse à la vitesse immédiatement plus élevée ou plus basse, un seul des éléments de commande actionnés à ce moment est ouvert et un autre fermé, le second train épicycloïdal (RS2) comprenant trois éléments d'entrée non accouplés, le premier élément d'entrée du second train épicycloïdal (RS2) pouvant être relié à l'élément de sortie du premier train épicycloïdal (RS1) par l'intermédiaire du premier élément de commande (40), le deuxième élément d'entrée du second train épicycloïdal (RS2) pouvant être relié à l'élément de sortie du premier train épicycloïdal (RS1) par l'intermédiaire du deuxième élément de commande (50) et être bloqué sur le carter (30) de la boîte de vitesses par l'intermédiaire du troisième élément de commande (60), et le troisième élément d'entrée du deuxième train épicycloïdal (RS2) pouvant être relié à l'arbre d'entrée par l'intermédiaire du cinquième élément de commande (80) et être bloqué sur le carter (30) de la boîte de vitesses par l'intermédiaire du quatrième élément de commande (70), et un élément de sortie du second train épicycloïdal (RS2) étant relié à l'arbre de sortie (4).

12. Boîte de vitesses épicycloïdale selon la revendication 11, **caractérisée en ce que** le premier train épicycloïdal (RS1) est disposé près d'une paroi (31) du carter (30) de la boîte de vitesses, au moins partiellement, au-dessus, dans la direction radiale, d'une saillie cylindrique (32) de la paroi (31) du carter de la boîte de vitesses ou d'un moyeu (34) relié rigidement à la paroi (31) du carter de la boîte de vitesses, la paroi (31) du carter de la boîte de vitesses étant constituée par une partie du carter (30) de la boîte de vitesses ou par une plaque intermédiaire (33) reliée solidairement au carter (30) de la boîte de vitesses, et la roue planétaire (10) du premier train épicycloïdal (RS1) étant reliée fonctionnellement à la saillie (32) ou au moyeu (34).

13. Boîte de vitesses épicycloïdale selon la revendication 12, **caractérisée en ce que** la paroi (31) du carter de la boîte de vitesse est disposée sur le côté du carter (30) de la boîte de vitesses qui est dirigé vers un arbre de moteur (1) du moteur d'entraînement de la boîte de vitesses épicycloïdale qui est relié fonctionnellement à l'arbre d'entrée (3).

14. Boîte de vitesses épicycloïdale selon l'une des revendications 11 à 13, **caractérisée en ce que** le premier train épicycloïdal (RS1) et les premier, deuxième et cinquième éléments de commande (40, 50, 80) sont disposés ensemble sur un côté du second train épicycloïdal (RS2).

15. Boîte de vitesses épicycloïdale selon l'une des revendications 11 à 14, **caractérisée en ce que** le cinquième élément de commande (80) est disposé entre le premier train épicycloïdal (RS1) et le second train épicycloïdal (RS2), dans une position immédiatement adjacente au premier train épicycloïdal (RS1) dans la direction axiale.

16. Boîte de vitesses épicycloïdale selon l'une des revendications 11 à 15, **caractérisée en ce que** le deuxième élément de commande (50) est disposé plus près du second train épicycloïdal (RS2) que le premier élément de commande (40), en particulier **en ce que** les disques (51) du deuxième élément de commande (50) sont disposés plus près du second train épicycloïdal (RS2) que les disques (41) du premier élément de commande (40).

17. Boîte de vitesses épicycloïdale selon l'une des revendications 11 à 16, **caractérisée en ce que** le premier élément de commande (40) est disposé immédiatement adjacent au premier train épicycloïdal (RS1), en particulier **en ce que** les disques (41) du premier élément de commande (40) et/ou le servodispositif (44) du premier élément de commande (40) sont disposés immédiatement adjacents au premier train épicycloïdal (RS1).

18. Boîte de vitesses épicycloïdale selon l'une des revendications 11 à 17, **caractérisée en ce que** les disques (41) du premier élément de commande (40) sont disposés au moins partiellement radialement au-dessus du premier train épicycloïdal (RS1).

19. Boîte de vitesses épicycloïdale selon l'une des revendications 11 à 18, **caractérisée en ce que** les disques (51) du deuxième élément de commande (50) sont axialement adjacents aux disques (41) du premier élément de commande (40), en direction du second train épicycloïdal (RS2).

20. Boîte de vitesses épicycloïdale selon l'une des revendications 11 à 19, **caractérisée en ce que** les disques (51) du deuxième élément de commande (50) sont disposés au moins partiellement radialement au-dessus du cinquième élément de commande (80), en particulier au moins partiellement au-dessus des disques (81) du cinquième élément de commande (80).

21. Boîte de vitesses épicycloïdale selon l'une des revendications 11 à 20, **caractérisée en ce que** le servodispositif (44) du premier élément de commande (40) est disposé au moins partiellement sur le côté du premier train épicycloïdal (RS1) qui est éloigné du second train épicycloïdal (RS2), en particulier radialement au-dessus de la saillie cylindrique (32) de la paroi (31) du carter de la boîte de vitesses ou radialement au-dessus du moyeu (34) relié à la paroi (31) du carter de la boîte de vitesses, dans une position adjacente au premier train épicycloïdal (RS1).

22. Boîte de vitesses épicycloïdale selon la revendication 21, **caractérisée en ce que** le servodispositif (44) du premier élément de commande (40) actionne les disques (41) du premier élément de commande (40) par leur côté qui est éloigné du second train épicycloïdal (RS2).

23. Boîte de vitesses épicycloïdale selon l'une des revendications 11 à 22, **caractérisée en ce que** la couronne à denture intérieure (19) du premier train épicycloïdal (RS1) est reliée à un support de disque extérieur (42) du premier élément de commande (40) et à un support de disques intérieurs (53) du deuxième élément de commande (50).

24. Boîte de vitesses épicycloïdale selon l'une des revendications 11 à 23, **caractérisée en ce qu'**un élément d'entrée du premier élément de commande (40), en particulier le support de disques extérieurs (42) du premier élément de commande (40) est monté rotatif sur la saillie cylindrique (32) de la paroi (31) du carter de la boîte de vitesses, ou sur le moyeu (34) relié à la paroi (31) du carter de la boîte de vitesses.

25. Boîte de vitesses épicycloïdale selon la revendication 24, **caractérisée en ce que**, dans la saillie cylindrique (32) de la paroi (31) du carter de la boîte de vitesses ou dans le moyeu (34) relié à la paroi (31) du carter de la boîte de vitesses, est disposé au moins un conduit d'amenée de pression (104) pour amener du fluide de pression au servodispositif (44) du premier élément de commande (40).

26. Boîte de vitesses épicycloïdale selon l'une des revendications 11 à 25, **caractérisée en ce qu'**un élément de sortie du premier élément de commande (40) recouvre radialement le cinquième élément de commande (80) en se prolongeant dans la direction axiale.

27. Boîte de vitesses épicycloïdale selon l'une des revendications 11 à 26, **caractérisée en ce que** l'élément de sortie du premier élément de commande (40) traverse une chambre d'embrayage du deuxième élément de commande (50).

28. Boîte de vitesses épicycloïdale selon l'une des revendications 11 à 27, **caractérisée en ce qu'**un servodispositif (54) du deuxième élément de commande (50) est disposé sur le côté des disques (51) du deuxième élément de commande (50) qui est dirigé vers le second train épicycloïdal (RS2).

29. Boîte de vitesses épicycloïdale selon la revendication 28, **caractérisée en ce que** le servodispositif (54) du deuxième élément de commande (50) actionne les disques (51) du deuxième élément de commande (50) par leur côté qui est dirigé vers le second train épicycloïdal (RS2).

30. Boîte de vitesses épicycloïdale selon l'une des revendications 11 à 29, **caractérisée en ce que** le troisième élément d'entrée du second train épicycloïdal (RS2) est relié, par l'intermédiaire d'un arbre de porte-satellites (5) à un élément de sortie du cinquième élément de commande (80), **en ce que** le premier élément d'entrée du second train épicycloïdal (RS2) est relié par l'intermédiaire d'un premier arbre planétaire (6) à un élément de sortie du premier élément de commande (40), et **en ce que** le deuxième élément d'entrée du second train épicycloïdal (RS2) est relié par l'intermédiaire d'un deuxième arbre planétaire (7) à un élément de sortie du deuxième élément de commande (50), l'arbre de porte-satellites (5) étant enfilé au centre à travers le second train épicycloïdal (RS2), et le premier arbre planétaire (6) s'étendant radialement au-dessus de l'arbre porte-satellites (5) et/ou étant monté rotatif sur celui-ci, entre les premier et second trains épicycloïdaux (RS1, RS2), et le deuxième arbre planétaire (7) s'étendant radialement au-dessus du premier arbre planétaire (6) et/ou étant monté rotatif sur cet arbre, entre les premier et second trains épicycloïdaux (RS1, RS2).

31. Boîte de vitesses épicycloïdale selon l'une des revendications 11 à 30, **caractérisée en ce que** le second train épicycloïdal (RS2) est constitué par un train épicycloïdal de Ravigneaux, comprenant une petite roue planétaire (20) constituant un premier élément d'entrée, une grande roue planétaire (21) constituant un deuxième élément d'entrée, des porte-satellites accouplés (24, 25) constituant un troisième élément d'entrée ainsi qu'une couronne à denture intérieure (26) constituant un élément de sortie du second train épicycloïdal (RS2).

32. Boîte de vitesses épicycloïdale selon l'une des revendications précédentes, en particulier selon la revendication 10, **caractérisée en ce que** l'arbre d'entrée (3) comporte des alésages d'amenée de lubrifiant (100, 101) pour l'amenée de lubrifiant (B) aux roues satellites (11, 14).

33. Boîte de vitesses épicycloïdale selon l'une des revendications précédentes, en particulier selon la revendication 11, **caractérisée en ce que** le moyeu (34) solidaire du carter de la boîte de vitesses ou la saillie cylindrique (32) de la paroi (31) du carter de la boîte de vitesses comporte au moins un conduit d'amenée de lubrifiant (110) pour l'amenée de lubrifiant (C) aux roues satellites (14).

34. Boîte de vitesses épicycloïdale selon la revendication 33, **caractérisée en ce que** l'amenée de lubrifiant s'effectue, à partir du conduit d'amenée de lubrifiant (110) du moyeu (34) solidaire du carter de la boîte de vitesses, ou à partir de la saillie cylindrique (32) de la paroi (31) du carter de boîte de vitesses, dans la chambre d'équilibrage de pression (49) du premier élément de commande (40), qui est proche de la plaque porteuse (17) du premier train épicycloïdal (RS1) et de cette chambre d'équilibrage de pression (49) dans la chambre de lubrifiant (109).

35. Boîte de vitesses épicycloïdale selon la revendication 34, **caractérisée en ce que** le disque de retenue (47) du premier élément de commande (40) comporte au moins un alésage de lubrifiant (111) par l'intermédiaire duquel le lubrifiant parvient de la chambre d'équilibrage de pression (49) dans la chambre de lubrifiant (109).

36. Boîte de vitesses épicycloïdale selon la revendication 35, **caractérisée en ce que** l'alésage de lubrifiant (111) du disque de retenue (47) du premier élément de commande (40) est disposé sur un diamètre de cercle de référence du disque de retenue (47), qui est plus grand que le diamètre de cercle de référence des alésages de lubrifiant des axes (15) du premier train épicycloïdal (RS1) qui intervient pour l'amenée de lubrifiant (C) aux roues satellites (14) du premier train épicycloïdal (RS1).

37. Boîte de vitesses épicycloïdale selon la revendication 36, **caractérisée en ce que** l'alésage de lubrifiant (111) du disque de retenue (47) du premier élément de commande (40) est disposé sur un diamètre de cercle de référence du disque de retenue (47) qui est inférieur ou égal au diamètre de cercle de référence des alésages de lubrifiant des axes (15) du premier train épicycloïdal (RS1) qui intervient pour l'amenée de lubrifiant (C) aux roues satellites (14) du premier train épicycloïdal (RS1).
